(19) Europäisches Patentamt
European Patent Office
Office européen des brevets

(11) EP 1 809 707 B1

(12) EUROPÄISCHE PATENTSCHRIFT

(45) Veröffentlichungstag und Bekanntmachung des Hinweises auf die Patenterteilung:
**27.01.2010 Patentblatt 2010/04**

(21) Anmeldenummer: **05810726.9**

(22) Anmeldetag: **27.10.2005**

(51) Int Cl.:
***C09D 5/00*** *(2006.01)* ***C09D 7/00*** *(2006.01)*
***C08K 3/00*** *(2006.01)*

(86) Internationale Anmeldenummer:
**PCT/EP2005/011486**

(87) Internationale Veröffentlichungsnummer:
**WO 2006/048167 (11.05.2006 Gazette 2006/19)**

# (54) BESCHICHTUNGSMASSEN

COATING MATERIALS

MATIERES DE REVETEMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **05.11.2004 DE 102004054048**

(43) Veröffentlichungstag der Anmeldung:
**25.07.2007 Patentblatt 2007/30**

(73) Patentinhaber: **BASF SE**
**67056 Ludwigshafen (DE)**

(72) Erfinder:
- **LEUNINGER, Jörg**
**55129 Mainz (DE)**
- **TIARKS, Franca**
**67061 Ludwigshafen (DE)**
- **WIESE, Harm**
**69121 Heidelberg (DE)**

(56) Entgegenhaltungen:

| | |
|---|---|
| **EP-A- 0 625 541** | **EP-A- 0 634 462** |
| **EP-A- 1 371 679** | **WO-A-93/12183** |
| **WO-A-03/000760** | **DE-A1-102004 010 155** |
| **FR-A- 2 842 531** | **US-A- 5 385 960** |

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 809 707 B1

Printed by Jouve, 75001 PARIS (FR)

## Beschreibung

Die vorliegende Erfindung betrifft eine wässrige Beschichtungsmasse, welche

a) Partikel, mit einer mittleren Teilchengröße ≥ 10 nm und ≤ 500 nm, welche aus Polymerisat und feinteiligem anorganischem Feststoff aufgebaut sind (Kompositpartikel) sowie
b) als wenigstens ein pulverförmiges Pigment, Titandioxid in der Anatas-Modifikation

enthält.
Um Anstrichen ein gutes Deckvermögen und die gewünschte Farbe zu geben, werden Pigmente eingesetzt. Aufgrund seines hohen Brechungsindex ist Titandioxid das wichtigste Weißpigment. Von den verschieden vorkommenden Titandioxidmodifikationen Rutil, Anatas und Brookit, weist Rutil mit 2,7 den höchsten Brechungsindex auf, weswegen zur Herstellung von Beschichtungsmassen insbesondere Titandioxid in der Rutil-Modifikation eingesetzt wird.
So offenbart die EP-A 625541 Beschichtungsmassen, zu deren Herstellung wässrige Polymerisatdispersionen sowie Titandioxidpartikel in Form einer Slurry oder einer Pigmentpaste eingesetzt werden. Durch eine spezielle Polymerisatzusammensetzung adsorbieren die Polymerisatteilchen auf den Titandioxidteilchen. In der Beschreibung finden sich keinerlei Ausführungen hinsichtlich der Modifikation des verwendeten Titandioxids. In den Beispielen wird jedoch Titandioxid in der Rutil-Modifikation eingesetzt. Hinweise auf wässrige Beschichtungsmassen, enthaltend Kompositpartikel und als Pigment Titandioxid in der Anatas-Modifikation, finden sich jedoch nicht.
Auch die WO 93/12183 offenbart die Herstellung wässriger Beschichtungsmassen, wobei anorganische Pigmentteilchen, wie beispielsweise Titandioxidteilchen, mittels eines Dispergiermittels in einem wässrigen Medium dispergiert werden, danach eine wässrige Polymerisatdispersion mit spezifischen Polymerisatpartikeln in das wässrige Medium gegeben werden, wobei diese spezifischen Polymerisatpartikel auf den anorganischen Pigmentteilchen adsorbieren und danach dieser Mischung noch ein sogenanntes filmbildendes Bindemittel zugegeben wird. In der Beschreibung finden sich keinerlei Ausführungen hinsichtlich der Modifikation des verwendeten Titandioxids. In den Beispielen wird jedoch Titandioxid in der Rutil-Modifikation eingesetzt.
Gegenstand der EP-A 634462 sind Titandioxidpartikel enthaltende Beschichtungszusammensetzungen und deren Verwendungen. Dabei können diese Beschichtungszusammensetzungen prinzipiell zwar feinstteilige Titandioxidpartikel in der Rutil- oder in der Anatas-Modifikation enthalten, wobei jedoch die Beschichtungsmassen keinerlei Kompositpartikel aufweisen und darüber hinaus auf Basis organischer Lösungsmittel formuliert sind.
Gemäß der EP-A 1371679 werden wässrige Mischungen offenbart, welche spezifische organische Nanopartikel enthalten, die sich auf die Oberflächen von Titandioxid- oder Füllstoffpartikeln anlagern können und so als effektive Dispergiermittel für diese anorganischen Feststoffe dienen. Wässrige Beschichtungsmassen, welche Kompositpartikel und als Pigment Titandioxid in der Anatas-Modifikation enthalten, werden weder offenbart noch nahe gelegt.
Die FR-A 2842531 betrifft ein weißes Anstrichmittel, welches zur Beschichtung eines Raumflugkörpers bestimmt ist und welches ein spezifisches solares Absorptionsvermögen bzw. ein spezifisches Infrarot-Emmisionsvermögen aufweist. Dabei wird ein solches Anstrichmittel durch eine Mischung erhalten, welche neben einem weißen Pigment, beispielsweise Titandioxid oder Zinkoxid und einem Bindemittel, beispielsweise ein Silikonharz oder ein Alkalimetallmetasilikat, zwingend noch Zinkperoxid enthält. In der Beschreibung finden sich jedoch keinerlei Ausführungen hinsichtlich der Modifikation des optional zu verwendeten Titandioxids. Beschichtungssysteme umfassend Kompositpartikel sowie Titandioxid in der Anatas-Modifikation werden daher weder offenbart noch nahe gelegt.
In den letzten Jahren wurde jedoch verstärkt Titandioxid in der Anatas-Modifikation (kurz "Anatas") in Beschichtungsmassen eingesetzt, da diese Beschichtungsmassen infolge ihrer sehr hydrophilen als auch stark oxidativen Oberflächen eine hohe Anschmutzungsresistenz aufweisen. Verantwortlich für diese extrem hydrophilen Oberflächen sollen photokatalytische Effekte des Anatas sein, welche unter der Einwirkung von UV-Licht, Luftsauerstoff und Wasser Radikale ausbilden. Ähnliche, allerdings abgeschwächte photokatalytische Effekte werden beispielsweise auch von den Pigmenten Zinkoxid (ZnO), Zinksulfid (ZnS), Eisen-(III)-oxid ($Fe_2O_3$) und Zinndioxid ($SnO_2$) berichtet. In deutlich abgeschwächter Form sind solche photokatalytischen Effekte auch von Titandioxid in der Rutil- bzw. Brookit-Modifikation bekannt (siehe R. Benedix et al., Lacer No. 5, 2000, Seiten 157 bis 167). Üblicherweise wird daher das als gebräuchlichstes Weißpigment eingesetzte Titandioxid in der Rutil-Modifikation oder, wenn eingesetzt, auch Titandioxid in der Brookit-Modifikation zur Unterdrückung vorgenannter photokatalytischer Effekte mit Metalloxiden, beispielsweise Silizium-, Aluminium- und/oder Zirkoniumoxiden beschichtet. Neben den hydrophilen Eigenschaften weisen die Oberflächen der Anatas sowie der anderen photokatalytisch aktiven Pigmente enthaltenden Beschichtungsmassen häufig auch noch antimikrobielle Eigenschaften auf. Anatas bzw. die anderen photokatalytisch aktiven Pigmente enthaltende Beschichtungsmassen und deren hydrophile und antimilcrobiellen Eigenschaften sowie deren Verwendung in anschmutzungsresistenten Oberflächen sind vielfach vorbeschrieben (siehe hierzu beispielsweise folgende japanische Patentanmeldungen mit den Anmeldenummem: 10-051556 (Isamu Paint Co. Ltd.), 11-216663 (Toto Ltd.), 11-044054 (Matsushita Electric Works Ltd.), 2000-260187 (Toto Ltd.).

Problematisch an der Verwendung photokatalytisch aktiver Pigmente, insbesondere des kostengünstigen Anatas in Beschichtungsmassen, welche organische Bindemittel enthalten, ist, dass das organische Bindemittel, in der Regel eine polymere Verbindung, durch die photokatalytischen Effekte angegriffen und dabei das organische Bindemittel abgebaut wird. Als Folge dieses Prozesses werden Pigment- und Füllstoffpartikel an der Oberfläche der Beschichtungsmasse freigelegt, was zum unerwünschten Phänomen der sogenannten Kreidung führt (siehe hierzu R. Benedix et al., Lacer No. 5, 2000, Seite 161 sowie R. Baumstark und M. Schwartz, Dispersionen für Bautenfarben, Acrylatsysteme in Theorie und Praxis, Seite 64, Curt R. Vincentz Verlag, Hannover, 2001). Auch ist bekannt, dass diese Beschichtungsmassen verstärkt zu Vergilbungsreaktionen neigen. Diese Effekte verhindern bislang den Einsatz organischer Bindemittel in diesem Arbeitsgebiet und erfordert die Verwendung von rein anorganischen Bindemitteln, wie beispielsweise Wasserglas, die keinem solchen Abbau unterliegen [siehe beispielsweise die japanische Patentanmeldung mit der Anmeldenummer 10-309419 (Nippon Paint Co. Ltd.)].

Aufgabe der vorliegenden Erfindung war es, wässrige Beschichtungsmassen auf Basis organischer Bindemittel und auf Basis von Anatas bereitzustellen, deren Oberflächen hydrophile und/oder antimikrobielle, d.h. anschmutzungsresistente Eigenschaften aufweisen und dabei gleichzeitig eine verminderte Kreidungs- und Vergilbungsneigung zeigen.

Die Aufgabe wurde durch die Bereitstellung der eingangs definierten wässrigen Beschichtungsmasse gelöst.

Kompositpartikel mit einer mittleren Teilchengröße ≥ 10 nm und ≤ 500 nm, welche aus Polymerisat und feinteiligem anorganischem Feststoff aufgebaut sind, insbesondere in Form ihrer wässrigen Dispersionen, sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix und feinteiligem anorganischen Feststoff aufgebaute Partikel in disperser Verteilung befindlich enthalten. Der mittlere Durchmesser der Kompositpartikel liegt häufig im Bereich ≥ 10 nm und ≤ 400 nm, bevorzugt im Bereich ≥ 50 nm und ≤ 400 nm und insbesondere bevorzugt im Bereich ≥ 100 nm und ≤ 400 nm. Bei den angegebenen mittleren Teilchendurchmessern handelt es sich im Rahmen dieser Schrift um die sogenannten $d_{50}$-Werte, welche über die Methode der Analytischen Ultrazentrifuge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer. High Resolution Particle Size Distribution and Density Gradient Techniques, W. Mächtle, Seiten 147 bis 175) bestimmt werden.

Kompositpartikel und Verfahren zu ihrer Herstellung in Form von wässrigen Kompositpartikel-Dispersionen sowie deren Verwendung sind dem Fachmann bekannt und beispielsweise in den Schriften US-A 3,544,500, US-A 4,421,660, US-A 4,608,401, US-A 4,981,882, EP-A 104 498, EP-A 505 230, EP-A 572 128, GB-A 2 227 739, WO 0118081, WO 0129106, WO 03000760 sowie in Long et al., Tianjin Daxue Xuebao 1991, 4, Seiten 10 bis 15, Bourgeat-Lami et al.,Die Angewandte Makromolekulare Chemie 1996, 242, Seiten 105 bis 122, Paulke et al., Synthesis Studies of Paramagnetic Polystyrene Latex Particles in Scientific and Clinical Applications of Magnetic Carriers, Seiten 69 bis 76, Plenum Press, New York, 1997, Armes et al., Advanced Materials 1999, 11, Nr. 5, Seiten 408 bis 410, offenbart.

Erfindungsgemäß können alle, beispielsweise auch die nach dem vorgenannten Stand der Technik zugänglichen Kompositpartikel eingesetzt werden. Dabei können die Kompositpartikel in Pulverform oder in wässrigem Medium als wässrige Kompositpartikel-Dispersion eingesetzt werden. Bevorzugt werden die Kompositpartikel jedoch in Form einer wässrigen Kompositpartikel-Dispersion eingesetzt.

Für die erfindungsgemäßen Beschichtungsmassen eignen sich vorteilhaft solche wässrigen Kompositpartikel-Dispersionen, welche nach einer in der WO 03000760 offenbarten Verfahrensweise - auf die im Rahmen dieser Schrift ausdrücklich Bezug genommen werden soll - hergestellt wurden. Dieses Verfahren zeichnet sich dadurch aus, dass wenigstens ein ethylenisch ungesättigtes Monomer in wässrigem Medium dispers verteilt und mittels wenigstens eines radikalischen Polymerisationsinitiators im Beisein wenigstens eines dispers verteilten, feinteiligen anorganischen Feststoffs und wenigstens eines Dispergiermittels nach der Methode der radikalisch wässrigen Emulsionspolymerisation polymerisiert wird, wobei

a) eine stabile wässrige Dispersion des wenigstens einen anorganischen Feststoffs eingesetzt wird, welche dadurch charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen gewichtsmittleren Durchmesser ≤ 100 nm aufweisen,

b) die dispergierten Feststoffteilchen des wenigstens einen anorganischen Feststoffs in einer wässrigen Standardkaliumchlorid-Lösung bei einem pH-Wert, der dem pH-Wert des wässrigen Dispergiermediums vor Beginn der Zugabe der Dispergiermittel entspricht, eine von Null verschiedene elektrophoretische Mobilität zeigen,

c) die wässrige Feststoffteilchendispersion vor Beginn der Zugabe des wenigstens einen ethylenisch ungesättigten Monomeren mit wenigstens einem anionischen, kationischen und nichtionischen Dispergiermittel versetzt wird,

d) danach von der Gesamtmenge des wenigstens einen Monomeren 0,01 bis 30 Gew.-% der wässrigen Feststoffteilchendispersion zugesetzt und bis zu einem Umsatz von wenigstens 90 % polymerisiert werden und

e) daran anschließend die Restmenge des wenigstens einen Monomeren unter Polymerisationsbedingungen nach Maßgabe des Verbrauchs kontinuierlich zugegeben wird.

Für dieses Verfahren sind alle diejenigen feinteiligen anorganischen Feststoffe geeignet, welche stabile wässrige Dispersionen ausbilden, die bei einer Anfangsfeststoffkonzentration von ≥ 1 Gew.-%, bezogen auf die wässrige Dispersion des wenigstens einen anorganischen Feststoffs, noch eine Stunde nach ihrer Herstellung ohne Rühren oder Schütteln mehr als 90 Gew.-% des ursprünglich dispergierten Feststoffes in dispergierter Form enthalten und deren dispergierten Feststoffteilchen einen Durchmesser ≤ 100 nm aufweisen und darüber hinaus bei einem pH-Wert, der dem pH-Wert des wässrigen Reaktionsmediums vor Beginn der Zugabe der Dispergiermittel entspricht, eine von Null verschiedene elektrophoretische Mobilität zeigen.

Die quantitative Bestimmung der Anfangsfeststoffkonzentration und der Feststoffkonzentration nach einer Stunde sowie die Ermittlung der Teilchendurchmesser erfolgt ebenfalls über die Methode der Analytischen Ultrazentrifuge.

Die Methode zur Bestimmung der elektrophoretischen Mobilität ist dem Fachmann bekannt (vgl. z.B. R.J. Hunter, Introduction to modern Colloid Science, Kapitel 8.4, Seiten 241 bis 248, Oxford University Press, Oxford, 1993 sowie K. Oka und K. Furusawa, in Electrical Phenomena at Interfaces, Surfactant Science Series, Vol. 76, Kapitel 8, Seiten 151 bis 232, Marcel Dekker, New York, 1998). Die elektrophoretische Mobilität der im wässrigen Reaktionsmedium dispergierten Feststoffteilchen wird mittels eines handelsüblichen Elektrophoresegeräts, wie beispielsweise dem Zetasizer 3000 der Fa. Malvern Instruments Ltd., bei 20 °C und 1 bar(absolut) bestimmt. Hierzu wird die wässrige Feststoffteilchendispersion mit einer pH-neutralen 10 millimolaren (mM) wässrigen Kaliumchlorid-Lösung (Standardkaliumchlorid-Lösung) soweit verdünnt, dass die Feststoffteilchen-Konzentration ca. 50 bis 100 mg/l beträgt. Die Einstellung der Meßprobe auf den pH-Wert, den das wässrige Reaktionsmedium vor Beginn der Zugabe der Dispergiermittel aufweist, erfolgt mittels der gängigen anorganischen Säuren, wie beispielsweise verdünnte Salzsäure oder Salpetersäure oder Basen, wie beispielsweise verdünnte Natronlauge oder Kalilauge. Die Wanderung der dispergierten Feststoffteilchen im elektrischen Feld wird mittels der sogenannten elektrophoretischen Lichtstreuung detektiert (vgl. z.B. B.R. Ware und W.H. Flygare, Chem. Phys. Lett. 1971, 12, Seiten 81 bis 85). Dabei wird das Vorzeichen der elektrophoretischen Mobilität durch die Wanderungsrichtung der dispergierten Feststoffteilchen definiert, d.h. wandern die dispergierten Feststoffteilchen zur Kathode, ist deren elektrophoretische Mobilität positiv, wandern sie dagegen zur Anode, ist sie negativ.

Ein geeigneter Parameter, um die elektrophoretische Mobilität von dispergierten Feststoffteilchen in einem gewissen Umfang zu beinflussen oder einzustellen, ist der pH-Wert des wässrigen Reaktionsmediums. Durch Protonierung bzw. Deprotonierung der dispergierten Feststoffteilchen wird die elektrophoretische Mobilität im saufen pH-Bereich (pH-Wert < 7) in positiver und im alkalischen Bereich (pH-Wert > 7) in negativer Richtung verändert. Ein für das in der WO 03000760 offenbarte Verfahren geeigneter pH-Bereich ist der, innerhalb dessen sich eine radikalisch initiierte wässrige Emulsionspolymerisation durchführen läßt. Dieser pH-Bereich liegt in der Regel bei pH 1 bis 12, häufig bei pH 1,5 bis 11 und oft bei pH 2 bis 10.

Der pH-Wert des wässrigen Reaktionsmediums kann mittels handelsüblicher Säuren, wie beispielsweise verdünnte Salz-, Salpeter- oder Schwefelsäure oder Basen, wie beispielsweise verdünnte Natron- oder Kalilauge, eingestellt werden. Häufig ist es günstig, wenn eine Teil- oder die Gesamtmenge der zur pH-Einstellung verwendeten Säure- oder Basenmenge dem wässrigen Reaktionsmedium vor dem wenigstens einen feinteiligen anorganischen Feststoff zugesetzt wird.

Vorteilhaft für das gemäß WO 03000760 offenbarte Verfahren ist, dass dann, wenn die dispergierten Feststoffteilchen unter den vorgenannten pH-Bedingungen

- eine elektrophoretische Mobilität mit negativem Vorzeichen aufweisen, pro 100 Gew.-Teilen des wenigstens einen ethylenisch ungesättigten Monomeren, 0,01 bis 10 Gew.-Teile, bevorzugt 0,05 bis 5 Gew.-Teile und insbesondere bevorzugt 0,1 bis 3 Gew.-Teile wenigstens eines kationischen Dispergiermittels, 0,01 bis 100 Gew.-Teile, bevorzugt 0,05 bis 50 Gew.-Telle und insbesondere bevorzugt 0,1 bis 20 Gew.-Teile wenigstens eines nichtionischen Dispergiermidels und wenigstens ein anionisches Dispergiermittel eingesetzt werden, wobei dessen Menge so bemessen wird, dass das äquivalente Verhältnis von anionischem zu kationischem Dispergiermittel größer 1 ist, oder
- eine elektrophoretische Mobilität mit positivem Vorzeichen aufweisen, pro 100 Gew.-Teilen des wenigstens einen ethylenisch ungesättigten Monomeren, 0,01 bis 10 Gew.-Teile, bevorzugt 0,05 bis 5 Gew.-Teile und insbesondere bevorzugt 0,1 bis 3 Gew.-Teile wenigstens eines anionischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens ein kationisches Dispergiermittel eingesetzt werden, wobei dessen Menge so bemessen

wird, dass das äquivalente Verhältnis von kationischem zu anionischem Dispergiermittel größer 1 ist.

Unter äquivalentem Verhältnis von anionischem zu kationischem Dispergiermittel wird das Verhältnis der eingesetzten Molzahl des anionischen Dispergiermittels multipliziert mit der Anzahl der pro Mol des anionischen Dispergiermittels enthaltenen anionischen Gruppen dividiert durch die eingesetzte Molzahl des kationischen Dispergiermittels multipliziert mit der Anzahl der pro Mol des kationischen Dispergiermittels enthaltenen kationischen Gruppen verstanden. Entsprechendes gilt für das äquvalente Verhältnis von kationischem zu anionischem Dispergiermittel.

Die Gesamtmenge des gemäß der WO 03000760 verwendeten wenigstens einen anionischen, kationischen und nichtionischen Dispergiermittels kann in der wässrigen Feststoffdispersion vorgelegt werden. Es ist jedoch auch möglich, lediglich eine Teilmenge der genannten Dispergiermittel, in der wässrigen Feststoffdispersion vorzulegen und die verbliebenen Restmengen während der radikalischen Emulsionspolymerisation kontinuierlich oder diskontinuierlich zuzugeben. Verfahrenswesentlich ist jedoch, dass vor und während der radikalisch initiierten Emulsionspolymerisation das vorgenannte äquivalente Verhältnis von anionischem und kationischem Dispergiermittel in Abhängigkeit vom elektrophoretischen Vorzeichen des feinteiligen Feststoffs aufrechterhalten wird. Werden daher anorganische Feststoffteilchen eingesetzt, welche unter den vorgenannten pH-Bedingungen eine elektrophoretische Mobilität mit negativem Vorzeichen aufweisen, so muss das äquivalente Verhältnis von anionischem zu kationischem Dispergiermittel während der gesamten Emulsionspolymerisation größer 1 sein. In entsprechender Weise muss bei anorganischen Feststoffteilchen mit einer elektrophoretischen Mobilität mit positivem Vorzeichen das äquivalente Verhältnis von kationischem zu anionischem Dispergiermittel während der gesamten Emulsionspolymerisation größer 1 sein. Günstig ist es, wenn die äquivalenten Verhältnisse $\geq 2$, $\geq 3$, $\geq 4$, $\geq 5$, $\geq 6$, $\geq 7$, oder $\geq 10$ sind, wobei die äquivalenten Verhältnisse im Bereich zwischen 2 und 5 besonders günstig sind.

Für das in der WO 03000760 offenbarte Verfahren sowie allgemein zur Herstellung von Kompositpartikel einsetzbare feinteilige anorganische Feststoffe sind Metalle, Metallverbindungen, wie Metalloxide und Metallsalze aber auch Halbmetall- und Nichtmetallverbindungen geeignet. Als feinteilige Metallpulver können Edelmetallkolloide, wie beispielsweise Palladium, Silber, Ruthenium, Platin, Gold und Rhodium sowie diese enthaltende Legierungen eingesetzt werden. Als feinteilige Metalloxide beispielhaft genannt seien Titandioxid (beispielsweise kommerziell verfügbar als Hombitec®-Marken der Fa. Sachtleben Chemie GmbH), Zirkonium-(IV)-oxid, Zinn-(II)-oxid, Zinn-(IV)-oxid (beispielsweise kommerziell verfügbar als Nyacol® SN-Marken der Fa. Akzo-Nobel), Aluminiumoxid (beispielsweise kommerziell verfügbar als Nyacol® AL-Marken der Fa. Akzo-Nobel), Bariumoxid, Magnesiumoxid, verschiedene Eisenoxide, wie Eisen-(II)-oxid (Wuestit), Eisen-(III)-oxid (Hämatit) und Eisen-(II/III)-oxid (Magnetit), Chrom-(III)-oxid, Antimon-(III)-oxid, Wismut-(III)-oxid, Zinkoxid (beispielsweise kommerziell verfügbar als Sachtotec®-Marken der Fa. Sachtleben Chemie GmbH), Nickel-(II)-oxid , Nickel-(III)-oxid, Cobalt-(II)-oxid, Cobalt-(III)-oxid, Kupfer-(II)-oxid, Yttrium-(III)-oxid (beispielsweise kommerziell verfügbar als Nyacol® YTTRIA-Marken der Fa. Akzo-Nobel), Cer-(IV)-oxid (beispielsweise kommerziell verfügbar als Nyacol® CEO2-Marken der Fa. Akzo-Nobel) amorph und/oder in ihren unterschiedlichen Kristallmodifikationen sowie deren Hydroxyoxide, wie beispielsweise Hydroxytitan-(IV)-oxid, Hydroxyzirkonium-(IV)-oxid, Hydroxyaluminiumoxid (beispielsweise kommerziell verfügbar als Disperal®-Marken der Fa. Condea-Chemie GmbH) und Hydroxyeisen-(III)-oxid amorph und/oder in ihren unterschiedlichen Kristallmodifikationen. Folgende amorphen und/oder in ihren unterschiedlichen Kristallstrukturen vorliegenden Metallsalze sind im erfindungsgemäßen Verfahren prinzipiell einsetzbar: Sulfide, wie Eisen-(II)-sulfid, Eisen-(III)-sulfid, Eisen-(II)-disulfid (Pyrit), Zinn-(II)-sulfid, Zinn-(IV)-sulfid, Quecksilber(II)-sulfid, Cadmium-(II)-sulfid, Zinksulfid, Kupfer-(II)-sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen-(III)-carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammoniumphosphate, wie Magnesiumammoniumphosphat, Zinkammoniumphosphat, Hydroxylapatit $[Ca_5\{(PO_4)_3OH\}]$, Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel® SH (Marke der südchemie AG), Saponit® SKS-20 und Hektorit® SKS 21 (Marken der Hoechst AG) sowie Laponite® RD und Laponite® GS (Marken der Laporte Industries Ltd.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tatrate, wie Calciumtatrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calciumlaurat, Linoleate, wie Calciumlinoleat, Oleate, wie Calciumoleat, Eisen-(II)-oleat oder Zinkoleat.

Als wesentliche erfindungsgemäß einsetzbare Halbmetallverbindung sei amorphes und/oder in unterschiedlichen Kristallstrukturen vorliegendes Siliziumdioxid genannt. Erfindungsgemäß geeignetes Siliziumdioxid ist kommerziell verfügbar und kann beispielsweise als Aerosil® (Marke der Fa. Degussa AG), Levasil® (Marke der Fa. Bayer AG), Ludox® (Marke der Fa. DuPont), Nyacol® und Bindzil® (Marken der Fa. Akzo-Nobel) und Snowtex® (Marke der Fa. Nissan Chemical Industries, Ltd.) bezogen werden. Erfindungsgemäß geeignete Nichtmetallverbindungen sind beispielsweise kolloidal vorliegender Graphit oder Diamant.

Als feinteilige anorganische Feststoffe sind solche besonders geeignet, deren Löslichkeit in Wasser bei 20 °C und 1 bar (absolut) ≤ 1 g/l, bevorzugt ≤ 0,1 g/l und insbesondere ≤ 0,01 g/l ist. Besonders bevorzugt sind Verbindungen ausgewählt aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat. Calciumorthophosphat, Magnesiumorthophosphat, Calciummetaphospat, Magnesiummetaphosphat, Calciumpyrophosphat, Magnesiumpyrophosphat, Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel® SH, Saponit® Skis-20 und Hektorit® SKS 21 sowie Laponite® RD und Laponite® GS, Eisen-(II)-oxid, Eisen-(III)-oxid, Eisen-(II/III)-oxid, Titandioxid, Hydroxylapatit, Zinkoxid und Zinksulfid. Insbesondere bevorzugt sind siliziumhaltige Verbindungen, wie pyrogene und/oder kolloidale Kieselsäure, Siliziumdioxid-Sole und/oder Schichtsilikate. Häufig weisen diese siliziumhaltigen Verbindungen eine elektrophoretische Mobilität mit negativem Vorzeichen auf.

Vorteilhaft können auch die kommerziell verfügbaren Verbindungen der Aerosil®-, Levasil®-, Ludox®-, Nyacol® und Bindzil®-Marken (Siliziumdioxid), Disperal®-Marken (Hydroxyaluminiumoxid), Nyacol® AL-Marken (Aluminiumoxid), Hombitec®-Marken (Titandioxid), Nyacol® SN-Marken (Zinn-(IV)-oxid), Nyacol® YTTRIA-Marken (Yttrium-(III)-oxid), Nyacol® CEO2-Marken (Cer-(IV)-oxid) und Sachtotec®-Marken (Zinkoxid) in den erfindungsgemäßen Verfahren eingesetzt werden.

Die zur Herstellung der Kompositpartikeln einsetzbaren feinteiligen anorganischen Feststoffe sind so beschaffen, dass die im wässrigen Reaktionsmedium dispergierten Feststoffteilchen einen Teilchendurchmesser von ≤ 100 nm aufweisen. Erfolgreich werden solche feinteiligen anorganischen Feststoffe eingesetzt, deren dispergierte Teilchen einen Teilchendurchmesser > 0 nm aber ≤ 90 nm, ≤ 80 nm, ≤ 70 nm, ≤ 60 nm, ≤ 50 nm, ≤ 40 nm, ≤ 30 nm, ≤ 20 nm oder ≤ 10 nm und alle Werte dazwischen aufweisen. Von Vorteil werden feinteilige anorganische Feststoffe eingesetzt, welche einen Telichendurchmesser ≤ 50 nm aufweisen. Die Ermittlung der Teilchendurchmesser erfolgt über die Methode der Analytischen Ultrazentrifuge.

Die Zugänglichkeit feinteiliger Feststoffe ist dem Fachmann prinzipiell bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992; D.F. Evans, H. Wennerström in The Colloidal Domain, Seiten 363 bis 405, Verlag Chemie, Weinheim, 1994 und R.J. Hunter in Foundations of Colloid Science, Vol. I, Seiten 10 bis 17, Clarendon Press, Oxford, 1991).

Die Herstellung der stabilen Feststoffdispersion erfolgt häufig direkt bei der Synthese der feinteiligen anorganischen Feststoffe in wässrigem Medium oder alternativ durch Eindispergieren des feinteiligen anorganischen Feststoffs in das wässrige Medium. Abhängig vom Herstellweg der feinteiligen anorganischen Feststoffe gelingt dies entweder direkt, beispielsweise beim gefälltem oder pyrogenem Siliziumdioxid, Aluminiumoxid etc. oder unter Zuhilfenahme geeigneter Hilfsaggregate, wie beispielsweise Dispergatoren oder Ultraschallsonotroden.

Vorteilhaft für die Herstellung der wässrigen Kompositpartikel-Dispersionen sind solche feinteiligen anorganischen Feststoffe geeignet, deren wässrige Feststoffdispersion bei einer Anfangsfeststoffkonzentration von ≥ 1 Gew.-%, bezogen auf die wässrige Dispersion des feinteiligen anorganischen Feststoffs, noch eine Stunde nach ihrer Herstellung bzw. durch Aufrühren oder Aufschütteln der sedimentierten Feststoffe, ohne weiteres Rühren oder Schütteln mehr als 90 Gew.-% des ursprünglich dispergierten Feststoffes in dispergierter Form enthält und deren dispergierten Feststoffteilchen einen Durchmesser ≤ 100 nm aufweisen. Üblich sind Anfangsfeststoffkonzentrationen ≤ 60 Gew.-%. Vorteilhaft können jedoch auch Anfangsfeststoffkonzentrationen ≤ 55 Gew.-%, ≤ 50 Gew.-%, ≤ 45 Gew.-%, ≤ 40 Gew.-%, ≤ 35 Gew.-%, ≤ 30 Gew.-%. ≤ 25 Gew.-%, ≤ 20 Gew.-%, ≤ 15 Gew.-%, ≤ 10 Gew.-% sowie ≥ 2 Gew.-%, ≥ 3-Gew.-%, ≥ 4 Gew.-% oder ≥ 5 Gew.-% und alle Werte dazwischen, jeweils bezogen auf die wässrige Dispersion des feinteiligen anorganischen Feststoffes, eingesetzt werden. Bezogen auf 100 Gew.-Teile des wenigstens einen ethylenisch ungesättigten Monomeren werden bei der Herstellung wässriger Kompositpartikel-Dispersionen häufig 1 bis 1000 Gew.-Teile, in der Regel 5 bis 300 Gew.-Teile und oft 10 bis 200 Gew.-Teile des wenigstens einen feinteiligen anorganischen

Feststoffes verwendet.

Bei der Herstellung der wässrigen Kompositpartikel-Dispersionen allgemein werden Dispergiermittel mitverwendet, die sowohl die feinteiligen anorganischen Feststoffteilchen als auch die Monomerentröpfchen und die gebildeten Kompositpartikel in der wässrigen Phase dispers verteilt halten und so die Stabilität der erzeugten wässrigen Kompositpartikel-Dispersionen gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Geeignete neutrale Schutzkolloide sind beispielsweise Polyvinyalkohole, Polyalkylenglykole, Cellulose-, Stärke- und Gelatinederivate.

Als anionische Schutzkolloide, d.h. Schutzkolloide, deren dispergierend wirkende Komponente wenigstens eine negative elektrische Ladung aufweist, kommen beispielsweise Polyacrylsäuren und Polymethacrylsäuren und deren Alkalimetallsalze, Acrylsäure, Methacrylsäure, 2-Acrylamido-2-methylpropansulfonsäure, 4-Styrolsulfonsäure und/oder Maleinsäureanhydrid enthaltende Copolymerisate und deren Alkalimetallsalze sowie Alkalimetallsalze von Sulfonsäuren hochmolekularer Verbindungen, wie beispielsweise Polystyrol, in Betracht.

Geeignete kationische Schutzkolloide, d.h. Schutzkolloide, deren dispergierend wirkende Komponente wenigstens eine positive elektrische Ladung aufweist, sind beispielsweise die am Stickstoff protonierten und/oder alkylierten Derivate von N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltenden Homo- und Copolymerisate.

Selbstverständlich können auch Gemische aus Emulgatoren und/oder Schutzkolloiden eingesetzt werden. Häufig werden als Dispergiermittel ausschließlich Emulgatoren eingesetzt, deren relative Molekulargewichte im Unterschied zu den Schutzkolloiden üblicherweise unter 1500 liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z.B. ethoxilierte Mono-, Di- und Tri-Alkylphenole (EO-Grad: 3 bis 50, Alkylrest: $C_4$ bis $C_{12}$) sowie ethoxilierte Fettalkohole (EO-Grad: 3 bis 80; Alkylrest: $C_8$ bis $C_{38}$). Beispiele hierfür sind die Lutensol® A-Marken ($C_{12}C_{14}$-Fettalkoholethoxilate, EO-Grad: 3 bis 8), Lutensol® AO-Marken ($C_{13}C_{15}$-Oxoalkoholethoxilate, EO-Grad: 3 bis 30), Lutensol® AT-Marken ($C_{16}C_{18}$-Fettalkoholethoxilate, EO-Grad: 11 bis 80), Lutensol® ON-Marken ($C_{10}$-Oxoalkoholethoxilate, EO-Grad: 3 bis 11) und die Lutensol® TO-Marken ($C_{13}$-Oxoalkoholethoxilate, EO-Grad: 3 bis 20) der BASF AG.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen **Formel I**

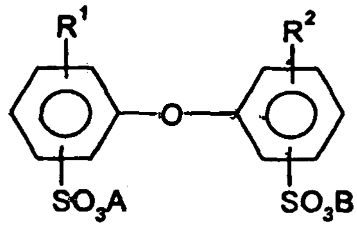

(I),

worin $R^1$ und $R^2$ H-Atome oder $C_4$- bis $C_{24}$-Alkyl bedeuten und nicht gleichzeitig H-Atome sind, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder -H, wobei $R^1$ und $R^2$ nicht beide gleichzeitig H-Atome sind. A und B sind bevorzugt Natrium, Kalium oder Ammonium, wobei Natrium besonders bevorzugt ist. Besonders vorteilhaft sind Verbindungen I, in denen A und B Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen I sind allgemein bekannt, z.B. aus US-A 4 269 749, und im Handel erhältlich.

Geeignete kationenaktive Emulgatoren sind in der Regel einen $C_6$- bis $C_{18}$-Alkyl-, - Aralkyl- oder heterocy-

clischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N-Octyl-N,N,N-trimethlyammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Häufig werden zur Herstellung der wässrigen Kompositpartikel-Dispersionen zwischen 0,1 bis 10 Gew.-%, oft 0,5 bis 7,0 Gew.-% und häufig 1,0 bis 5,0 Gew.-% an Dispergiermittel, jeweils bezogen auf die Gesamtmenge an wässriger Kompositpartikel-Dispersion, eingesetzt. Bevorzugt werden Emulgatoren verwendet.

Für die Herstellung der Kompositpartikel kommen als ein ethylenisch ungesättigte Monomere u.a. insbesondere in einfacher Weise radikalisch polymerisierbare Monomere in Betracht, wie beispielsweise Ethylen, vinylaromatische Monomere, wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäuredin-butylester, Nitrile α,β-monoethylenisch ungesättigter Carbonsäuren, wie Acrylnitril sowie $C_{4-8}$-konjugierte Diene, wie 1,3-Butadien und Isopren. Die genannten Monomere bilden in der Regel die Hauptmonomeren, die, bezogen auf die Gesamtmenge der nach dem erfindungsgemäßen Verfahren zu polymerisierenden Monomeren normalerweise einen Anteil von ≥ 50 Gew.-%, ≥ 80 Gew.-% oder ≥ 90 Gew.-% auf sich vereinen. In aller Regel weisen diese Monomeren in Wasser bei Normalbedingungen [20 °C, 1 bar (absolut)] lediglich eine mäßige bis geringe Löslichkeit auf.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykofdiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Erfindungsgemäß werden die vorgenannten Monomeren, bezogen auf die Gesamtmenge der zu polymerisierenden Monomeren, in Mengen von bis zu 5 Gew.-%, insbesondere 0,1 bis 3 Gew.-% einpolymerisiert.

Optional sind auch Siloxangruppen enthaltende ethylenisch ungesättigte Monomere, wie die Vinyltrialkoxysilane, beispielsweise Vinyltrimethoxysilan, Alkylvinyldialkoxysilane, Acryloxyalkyltrialkoxysilane, oder Methacryloxyalkyltrialkoxysilane, wie beispielsweise Acryloxyethyltrimethoxysilan, Methacryloxyethyltrimethoxysilan, Acryloxypropyltrimethoxysilan oder Methacryloxypropyltrimethoxysilan einsetzbar. Diese Monomere werden in Mengen von bis zu 5 Gew.-%, häufig 0,01 bis 3 Gew.-% und oft von 0,05 bis 1 Gew.-%, jeweils bezogen auf die Gesamtmonomerenmenge, verwendet. Erfindungsgemäß vorteilhaft sind Beschichtungsmassen, deren Polymerisat vorgenannte Siloxangruppen enthaltende Monomere zu 0,01 bis 5 Gew.-%, insbesondere 0,01 bis 3 Gew.-% und bevorzugt 0,05 bis 1,5 Gew.-% in einpolymerisierter Form enthalten.

Daneben können als Monomere zusätzlich solche ethylenisch ungesättigten Monomere A, die entweder wenigstens eine Säuregruppe und/oder deren entsprechendes Anion oder solche ethylenisch ungesättigten Monomere B, die wenigstens eine Amino-, Amido-, Ureido- oder N-heterocyclische Gruppe und/oder deren am Stickstoff protonierten oder alkylierten Ammoniumderivate enthalten, eingesetzt werden. Bezogen auf die Gesamtmonomerenmenge, beträgt die Menge an Monomeren A bzw. Monomeren B bis zu 10 Gew.-%, oft 0,1 bis 7 Gew.-% und häufig 0,2 bis 5 Gew.-%.

Als Monomere A werden ethylenisch ungesättigte Monomere mit wenigstens einer Säuregruppe eingesetzt. Dabei kann die Säuregruppe beispielsweise eine Carbonsäure-, Sulfonsäure-, Schwefelsäure-, Phosphorsäure- und/ oder Phosphonsäuregruppe sein. Beispiele für Monomere A sind Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie Phosphorsäuremonoester von n-Hydroxyalkylacrylaten und n-Hydroxyalkylmethacrylaten, wie beispielsweise Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat. Erfindungsgemäß lassen sich aber auch die Ammonium- und Alkalimetallsalze der vorgenannten wengistens eine Säuregruppe aufweisenden ethylenisch ungesättigten Monomeren einsetzen. Als Alkalimetall insbesondere bevorzugt ist Natrium und Kalium. Beispiele hierfür sind die Ammonium-, Natrium- und Kaliumsalze der Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie die Mono- und Di-Ammonium-, -Natrium- und -Kaliumsalze der Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat.

Bevorzugt werden Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure eingesetzt.

Als Monomere B werden ethylenisch ungesättigte Monomere verwendet, die wenigstens eine Amino-, Amido-, Ureido- oder N-heterocyclische Gruppe und/oder deren am Stickstoff protonierten oder alkylierten Ammoniumderivate enthalten.

Beispiele für Monomere B, die wenigstens eine Aminogruppe enthalten sind 2-Aminoethylacrylat, 2-Aminoethylmethacrylat, 3-Aminopropylacrylat, 3-Aminopropylmethacrylat, 4-Amino-n-butylacrylat, 4-Amino-n-butylmethacrylat, 2-(N-Methylamino)ethylacrylat, 2-(N-Methylamino)ethylmethacrylat, 2-(N-Ethylamino)ethylacrylat, 2-(N-Ethylamino) ethylmethacrylat, 2-(N-n-Propylamino)ethylacrylat, 2-(N-n-Propylamino)ethylmethacrylat, 2-(N-iso-Propylamino) ethylacrylat, 2-(N-iso-Propylamino)et-hylmethacrylat, 2-(N-tert.-Butylamino)ethylacrylat, 2-(N-tert.-Butylamino)ethylmethacrylat (beispielsweise kommerziell verfügbar als Norsocryl® TBAEMA der Fa. Elf Atochem), 2-(N,N-Dimethylamino) ethylacrylat (beispielsweise kommerziell verfügbar als Ncrsocryl® A-DAME der Fa. Elf Atochem), 2-(N,N-Dimethylamino) ethylmethacrylat (beispielsweise kommerziell verfügbar als Norsocryl® MADAME der Fa. Elf Atochem), 2-(N,N-Diethylamino)ethylacrylat, 2-(N,N-Diethylamino)ethylmethacrylat, 2-(N,N-Di-n-propylamino)ethylacrylat, 2-(N,N-Di-n-propylamino)ethylmethacrylat, 2-(N,N-Di-iso-propylamino)ethylacrylat, 2-(N,N-Di-iso-propylamino)ethylmethacrylat, 3-(N-Methylamino)propylacrylat, 3-(N-Methylamino)propylmethacrylat, 3-(N-Ethylamino)propylacrylat, 3-(N-Ethylamino)propylmethacrylat, 3-(N-n-Propylamino)propylacrylat, 3-(N-n-Propylamino)propylmethacrylat, 3-(N-iso-Propylamino)propylacrylat, 3-(N-iso-Propylamino)propylmethacrylat, 3-(N-tert.-Butylamino)propylacrylat, 3-(N-tert.-Butylamino)propylmethacrylat, 3-(N,N-Dimethylamino)propylacrylat, 3-(N,N-Dimethylamino)propylmethacrylat, 3-(N,N-Diethylamino)propylacrylat, 3-(N,N-Diethylamino)propylmethacrylat, 3-(N,N-Di-n-propylamino)propylacrylat, 3-(N,N-Di-n-propylamino) propylmethacrylat, 3-(N,N-Di-iso-propylamino)propylacrylat und 3-(N,N-Di-iso-propylamino)propylmethacrylat.

Beispiele für Monomere B, die wenigstens eine Amidogruppe enthalten sind Acrylamid, Methacrylamid, N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N-tert.-Butylacrylamid, N-tert.-Butylmethacrylamid, N,N-Dimethylacrylamid, N,N-Dimethylmethacrylamid, N,N-Diethylacrylamid, N,N-Diethylmethacrylamid, N,N-Di-n-propylacrylamid, N,N-Di-n-propylmethacrylamid, N,N-Di-iso-propylacrylamid, N,N-Di-iso-propylmethacrylamid, N,N-Di-n-butylacrylamid, N,N-Di-n-butylmethacrylamid, N-(3-N',N'-Dimethylaminopropyl)methacrylamid, Diacetonacrylamid, N, N'-Methylenbisacrylamid, N-(Diphenylmethyl)acrylamid, N-Cyclohexylacrylamid, aber auch N-Vinylpyrrolidon und N-Vinylcaprolactam.

Beispiele für Monomere B, die wenigstens eine Ureidogruppe enthalten sind N,N'-Divinylethylenharnstoff und 2-(1-Imidazolin-2-onyl)ethylmethacrylat (beispielsweise kommerziell verfügbar als Norsocryl® 100 der Fa. Elf Atochem).

Beispiele für Monomere B, die wenigstens eine N-heterocyclische Gruppe enthalten sind 2-Vinylpyridin, 4-Vinylpyridin, 1-Vinylimidazol, 2-Vinylimidazol und N-Vinylcarbazol.

Bevorzugt werden folgende Verbindungen eingesetzt: 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylal

Abhängig vom pH-Wert des wässrigen Reaktionsmediums kann ein Teil oder die Gesamtmenge der vorgenannten stickstoffhaltigen Monomere B in der am Stickstoff protonierten quartären Ammoniumform vorliegen.

Als Monomere B, welche am Stickstoff eine quartäre Alkylammoniumstruktur aufweisen, seien beispielhaft genannt 2-(N,N,N-Trimethylammonium)ethylacrylatchlorid (beispielsweise kommerziell verfügbar als Norsocryl® ADAMQUAT MC 80 der Fa. Elf Atochem), 2-(N,N,N-Trimethylammonium)ethylmethacrylatchlorid (beispielsweise kommerziell verfügbar als Norsocryl® MADQUAT MC 75 der Fa. Elf Atochem), 2-(N-Methyl-N,N-diethylammonium)ethylacrylatchlorid, 2-(N-Methyl-N,N-diethylammonium)ethylmethacrylatchlorid, 2-(N-Methyl-N,N-dipropylammonium)ethylacrylatchlorid, 2-(N-Methyl-N,N-dipropylammonium)ethylmethacrylat, 2-(N-Benzyl-N,N-dimethylammonium)ethylacrylatchlorid (beispielsweise kommerziell verfügbar als Norsocryl® ADAMQUAT BZ 80 der Fa. Elf Atochem), 2-(N-Benzyl-N,N-dimethylammonium)ethylmethacrylatchlorid (beispielsweise kommerziell verfügbar als Norsocryl® MADQUAT BZ 75 der Fa. Elf Atochem), 2-(N-Benzyl-N,N-diethylammonium)ethylacrylatchlorid, 2-(N-Benzyl-N,N-diethylammonium)ethylmethacrylatchlorid, 2-( N-Benzyl-N,N-dipropylammonium)ethylacrylatchlorid, 2-( N-Benzyl-N,N-dipropylammonium)ethylmethacrylatchlorid, 3-(N,N,N-Trimethylammonium)propylacrylatchlorid, 3-(N,N,N-Trimethylammonium)propylmethacrylatchlorid, 3-(N-Methyl-N,N-diethylammonium)propylacrylatchlorid, 3-(N-Methyl-N,N-diethylammonium)propylmethacrylatchlorid, 3-(N-Methyl-N,N-dipropylammonium)propylacrylatchlorid, 3-(N-Methyl-N,N-dipropylammonium) propylmethacrylatchlorid, 3-(N-Benzyl-N,N-dimethylammonium)propylacrylatchlorid, 3-(N-Benzyl-N,N-dimethylammonium)propylmethacrylatchlorid, 3-(N-Benzyl-N,N-diethylammonium)propylacrylatchlorid, 3-(N-Benzyl-N,N-diethylammonium)propylmethacrylatchlorid, 3-(N-Benzyl-N,N-dipropylammonium)propylacrylatchlorid und 3-(N-Benzyl-N,N-dipropylammonium)propylmethacrylatchlorid. Selbstverständlich können an Stelle der genannten Chloride auch die entsprechenden Bromide und Sulfate eingesetzt werden.

Bevorzugt werden 2-(N,N,N-Trimethylammonium)ethylacrylatchlorid, 2-(N,N,N-Trimethylammonium)ethylmethacrylatchlorid, 2-(N-Benzyl-N,N-dimethylammonium)ethylacrylatchlorid und 2-(N-Benzyl-N,N-dimethylammonium) ethylmethacrylatchlorid verwendet.

Selbstverständlich können auch Gemische der vorgenannten ethylenisch ungesättigten Monomere eingesetzt werden.

Von Bedeutung ist, dass für das gemäß der WO 03000760 offenbarte Verfahren, im Falle des Vorliegens von dispergierten Feststoffteilchen mit einer elektrophoretischen Mobilität mit negativem Vorzeichen, eine Teil- oder die Gesamtmenge des wenigstens einen anionischen Dispergiermittels durch die äquivalente Menge wenigstens eines Monomeren A und im Falle des Vorliegens von dispergierten Feststoffteilchen mit einer elektrophoretischen Mobilität mit positivem Vorzeichen, eine Teil- oder die Gesamtmenge des wenigstens einen kationischen Dispergiermittels durch die äquivalente Menge wenigstens eines Monomeren B ersetzt werden kann.

Zur Herstellung der wässrigen Kompositpartikel-Dispersion durch radikalische Polymerisation kommen alle diejenigen radikalischen Polymerisationsinitiatoren in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diacylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/ oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten radikalischen Polymerisationsinitiators, bezogen auf die Gesamtmenge des Monomerengemisches, 0,1 bis 5 Gew.-%.

Als Reaktionstemperatur für die radikalische wässrige Polymerisationsreaktion in Anwesenheit des feinteiligen anorganischen Feststoffes kommt der gesamte Bereich von 0 bis 170 °C in Betracht. Dabei werden in der Regel Temperaturen von 50 bis 120 °C, häufig 60 bis 110 °C und oft ≥ 70 bis 100 °C angewendet. Die radikalische wässrige Emulsionspolymerisation kann bei einem Druck kleiner, gleich oder größer 1 bar (absolut) durchgeführt werden, wobei die Polymerisationstemperatur 100 °C übersteigen und bis zu 170 °C betragen kann. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Polymerisation bei 1 bar (absolut) unter Inertgasatmosphäre, wie beispielsweise unter Stickstoff oder Argon durchgeführt.

Das wässrige Reaktionsmedium kann prinzipiell in untergeordnetem Maße auch wasserlösliche organische Lösungsmittel, wie beispielsweise Methanol, Ethanol, Isopropanol, Butanole, Pentanole, aber auch Aceton etc. umfassen. Bevorzugt erfolgt die Polymerisationsreaktion jedoch in Abwesenheit solcher Lösungsmittel.

Neben den vorgenannten Komponenten können in den Verfahren zur Herstellung der wässrigen Kompositpartikel-Dispersion optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan,

Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise E-thanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen. Die optional eingesetzte Gesamtmenge der radikalkettenübertragenden Verbindungen, bezogen auf die Gesamtmenge der zu polymerisierenden Monomeren, ist in der Regel ≤ 5 Gew.-%, oft ≤ 3 Gew.-% und häufig ≤ 1 Gew.-%.

Die erfindungsgemäß eingesetzten wässrigen Kompositpartikel-Dispersionen weisen üblicherweise einen Gesamtfeststoffgehalt von 1 bis 70 Gew.-%, häufig von 5 bis 65 Gew.-% und oft von 10 bis 60 Gew.-% auf.

Die erfindungsgemäß einsetzbaren Kompositpartikel können unterschiedliche Strukturen aufweisen. Dabei können die Kompositpartikel ein oder mehrere der feinteiligen Feststoffteilchen enthalten. Die feinteiligen Feststoffteilchen können vollständig von der Polymermatrix umhüllt sein. Es ist aber auch möglich, dass ein Teil der feinteiligen Feststoffteilchen von der Polymermatrix umhüllt ist, während ein anderer Teil auf der Oberfläche der Polymermatrix angeordnet ist. Selbstverständlich ist es auch möglich, dass ein Großteil der feinteiligen Feststoffpartikel auf der Oberfläche der Polymermatrix gebunden ist.

Günstig ist es, wenn die für die erfindungsgemäße Beschichtungsmasse eingesetzten Kompositpartikel einen Gehalt an feinteiligem anorganischem Feststoff von ≥ 10 Gew.-%, bevorzugt ≥ 15 Gew.-% und insbesondere bevorzugt ≥ 20 Gew.-% aufweisen.

Häufig werden insbesondere solche Kompositpartikel bzw. Kompositpartikel-Dispersionen eingesetzt, deren Kompositpartikel aus Polymerisaten aufgebaut sind, welche verfilmbar sind und deren Mindestfilmbildetemperatur ≤ 150 °C bevorzugt ≤ 100 °C und besonders bevorzugt ≤ 50 °C ist. Da die Mindestfilmbildetemperatur unterhalb 0 °C nicht mehr messbar ist, kann die untere Grenze der Mindestfilmbildetemperatur nur durch die Glasübergangstemperatur angegeben werden. Die Glasübergangstemperaturen sollten dabei -60 °C, vorzugsweise -30 °C oder -15 °C nicht unterschreiten. Häufig liegen die Glasübergangstemperaturen im Bereich ≤ 150 °C, bevorzugt im Bereich ≤ 100 °C und besonders bevorzugt im Bereich ≤ 50 °C. Die Bestimmung der Mindestfilmbildetemperatur erfolgt nach DIN 53 787 bzw. ISO 2115 und die Bestimmung der Glasübergangstemperatur nach DIN 53 765 (Differential Scanning Calorimetry, 20 K/min, midpoint-Messung).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur $T_g$ von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Encyclopedia of Industrial Chemistry, 5. Aufl., Vol. A21, Seite 189, Verlag Chemie, Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York, 1966; 2nd Ed. J.Wiley, New York, 1975 und 3rd Ed. J. Wiley, New York, 1989.

Erfindungsgemäß enthält die wässrige Beschichtungsmasse 5 bis 85 Gew.-%, oft 10 bis 70 Gew.-% und häufig 15 bis 55 Gew.-% an Kompositpartikel, jeweils bezogen auf den Feststoffgehalt der wässrigen Beschichtungsmasse.

Die erfindungsgemäße wässrige Beschichtungsmasse enthält als photokatalytisch aktives und daher nicht beschichtetes Pigment Titandioxid in der Anatas-Modifikation.

Die erfindungsgemäß bevorzugte Beschichtungsmasse enthält neben dem Anatas häufig noch wenigstens ein weiteres pulverförmiges Pigment und/oder wenigstens einen pulverförmigen Füllstoff. Als pulverförmig sollen im Rahmen dieser Schrift alle Pigmente mit einer mittleren Primärteilchengröße ≤ 1 μm (bestimmt durch dem Fachmann

geläufige Lichtstreumethoden; ISO 13321) und alle Füllstoffe ≤ 100 μm (beispielsweise durch Siebung mit entsprechender Maschenweite bestimmt) angesehen werden. Selbstverständlich sind anspruchsgemäß auch solche sogenannten wässrigen Pigment- und/oder Füllstoffslurries umfasst, welche im wässrigen Medium dispergierte pulverförmige Pigmente und/oder pulverförmige Füllstoffe enthalten.

Erfindungsgemäß bevorzugt enthält die wässrige Beschichtungsmasse 0,05 bis 20 Gew.-%, oft 0,5 bis 10 Gew.-% und häufig 1 bis 8 Gew.-% an Anatas, jeweils bezogen auf den Feststoffgehalt der wässrigen Beschichtungsmasse.

Als wenigstens ein weiteres pulverförmiges Pigment können prinzipiell alle von Anatas verschiedenen sogenannten Weiß- bzw. Buntpigmente eingesetzt werden.

Als wichtigstes weiteres Weißpigment ist aufgrund seines hohen Brechungsindex und seines guten Deckvermögens Titandioxid in Form seiner Brookit- und Rutil-Modifikationen zu nennen. Aber auch Zinkoxid und Zinksulfid werden als Weißpigmente eingesetzt. Dabei können Titandioxid in Form seiner Brookit- und Rutil-Modifikationen in oberflächenbeschichteter (d.h. gecoateter und daher in photokatalytisch nicht aktiver) bzw. unbeschichteter (d.h. nicht gecoateter und daher in photokatalytisch aktiver) Form eingesetzt werden. Insbesondere wird als wenigstens ein weiteres Weißpigment Titandioxid in Form seiner Rutil-Modifikation eingesetzt, welches in gecoateter Form vorliegt. Daneben werden aber auch organische Weißpigmente, wie beispielsweise nichtverfilmende styrol- und carboxylgruppenreiche hohle Polymerisatteilchen mit einer Teilchengröße von 300 bis 400 nm (sogenannte Opakteilchen) verwendet.

Neben Weißpigmenten können zur Farbgestaltung der Beschichtungsmasse dem Fachmann geläufige unterschiedlichste Buntpigmente, beispielsweise die etwas preiswerteren anorganischen Eisen-, Cadmium-, Chrom- und Bleioxide bzw. -sulfide, Bleimolybdat, Kobaltblau oder Ruß sowie die etwas teureren organischen Pigmente, beispielsweise Phthalocyanine, Azopigmente, Chinacridone, Perylene oder Carbozole eingesetzt werden.

Insbesondere wird jedoch Titandioxid in der Rutil-Modifikation als weiteres Weißpigment verwendet. Mit besonderem Vorteil wird dieses Titandioxid in einer mit Metalloxiden beschichteten Oberfläche eingesetzt (beispielsweise Kronos® 2190 oder Kronos® 2044 der Fa. Kronos Titan GmbH oder Tronox® CR 828 der Fa. Kerr & McGee Pigments GmbH & Co. KG).

In der Regel enthält die erfindungsgemäß bevorzugte wässrige Beschichtungsmasse eine Gesamtmenge von 5 bis 60 Gew.-%, oft 10 bis 50 Gew.-% und häufig 20 bis 45 Gew.-% von Anatas verschiedener, weiterer Pigmente, jeweils bezogen auf den Feststoffgehalt der wässrigen Beschichtungsmasse.

Als wenigstens ein pulverförmiger Füllstoff werden im wesentlichen anorganische Materialien mit im Vergleich zu den Pigmenten geringerem Brechungsindex verwendet. Die pulverförmigen Füllstoffe sind dabei häufig natürlich vorkommende Mineralien, wie beispielsweise Calcit, Kreide, Dolomit, Kaolin, Talk, Glimmer, Diatomeenerde, Baryt, Quarz oder Talk/Chlorit-Verwachsungen aber auch synthetisch hergestellte anorganische Verbindungen, wie beispielsweise präzipitiertes Kalziumcarbonat, kalziniertes Kaolin oder Bariumsulfat sowie pyrogene Kieselsäure. Bevorzugt wird als Füllstoff Kalziumcarbonat in Form des kristallinen Calcits oder der amorphen Kreide eingesetzt.

In der Regel enthält die erfindungsgemäße wässrige Beschichtungsmasse eine Gesamtmenge von 0 bis 80 Gew.-%, oft 1 bis 60 Gew.-% und häufig 3 bis 40-Gew.-% pulverförmiger Füllstoffe, jeweils bezogen auf den Feststoffgehalt der wässrigen Beschichtungsmasse.

Von Vorteil ist, wenn die erfindungsgemäße wässrige Beschichtungsmasse eine Pigmentvolumenkonzentration (PVK) ≥ 10 %, oft ≥ 20 %, ≥ 30 % oder ≥ 40 % und häufig ≤ 60 %, ≤ 70 % oder ≤ 80 % aufweist. Abhängig vom Einsatzgebiet können beispielsweise PVK von ≥ 35 und ≤ 60 % (Fassadenfarben), ≥ 20 und ≤ 40 % (Holzfarben), ≥ 15 und ≤ 25 % (Glanzfarben), ≥ 40 und ≤ 80 % (Innenraumfarben) oder ≥ 80 und ≤ 95 % (Kunstharzputze) eingestellt werden. Für den Fachmann ist die PVK eine der wesentlichen Kenngrößen zur Charakterisierung von Beschichtungsmassen, insbesondere Anstrichmittel. Dabei ist die PVK die rechnerische Beschreibung des Volumenanteils der pulverförmigen Pigmente, pulverförmigen Füllstoffe sowie der feinteiligen anorganischen Feststoffe am Gesamtvolumen der getrockneten Beschichtungsmasse (Beschichtung). Die PVK wird wie in folgender Gleichung angegeben errechnet:

$$\%\,PVK = \frac{\text{Volumen der Pigmente, Füllstoffe und der feinteiligen anorganischen Feststoffe x 100}}{\text{Volumen polymeres Bindemittel + Volumen der Pigmente, Füllstoffe und feinteiligen anorganischen Feststoffe}}$$

Wesentlich für das Verständnis vorliegender Erfindung ist, dass die Beschichtungsmasse umso weniger polymeres Bindemittel (= Polymerisat der Kompositpartikel) enthält, je höher der PVK-Wert der Beschichtungsmasse eingestellt ist.

Vorteilhafte wässrige Beschichtungsmasse enthalten

| | |
|---|---|
| 5 bis 85 Gew.-% | Kompositpartikel, |
| 0,05 bis 20 Gew.-% | pulverförmiges Titandioxid in der Anatas-Modifikation, |
| 5 bis 60 Gew.-% | weitere pulverförmige Pigmente, |
| 0 bis 80 Gew.-% | pulverförmige Füllstoffe sowie |
| 0 bis 10 Gew.-% | weitere übliche Hilfsstoffe, |

jeweils bezogen auf den Feststoffgehalt der wässrigen Beschichtungsmasse, enthält.

Soll die erfindungsgemäße Beschichtungsmasse beispielsweise als Fassadenfarbe eingesetzt werden, so enthält sie vorteilhaft

| | |
|---|---|
| 25 bis 55 Gew.-% | Kompositpartikel, |
| 1 bis 8 Gew.-% | pulverförmiges Titandioxid in der Anatas-Modifikation, |
| 20 bis 45 Gew.-% | weitere pulverförmige Pigmente, |
| 3 bis 30 Gew.-% | pulverförmige Füllstoffe sowie |
| 0,05 bis 5 Gew.-% | weitere übliche Hilfsstoffe, |

jeweils bezogen auf den Feststoffgehalt der wässrigen Beschichtungsmasse.

Soll dagegen die erfindungsgemäße Beschichtungsmasse beispielsweise als Innenraumfarbe eingesetzt werden, so enthält sie vorteilhaft

| | |
|---|---|
| 5 bis 35 Gew.-% | Kompositpartikel, |
| 0,1 bis 8 Gew.-% | pulverförmiges Titandioxid in der Anatas-Modifikation, |
| 5 bis 35 Gew.-% | weitere pulverförmige Pigmente, |
| 25 bis 60 Gew.-% | pulverförmige Füllstoffe sowie |
| 0,05 bis 5 Gew.-% | weitere übliche Hilfsstoffe, |

jeweils bezogen auf den Feststoffgehalt der wässrigen Beschichtungsmasse.

Wird die erfindungsgemäße Beschichtungsmasse beispielsweise als Kunstharzputz eingesetzt, so enthält sie vorteilhaft

| | |
|---|---|
| 5 bis 25 Gew.-% | Kompositpartikel, |
| 0,1 bis 5 Gew.-% | pulverförmiges Titandioxid in der Anatas-Modifikation, |
| 5 bis 15 Gew.-% | weitere pulverförmige Pigmente, |
| 40 bis 80 Gew.-% | pulverförmige Füllstoffe sowie |
| 0,05 bis 5 Gew.-% | weitere übliche Hilfsstoffe, |

jeweils bezogen auf den Feststoffgehalt der wässrigen Beschichtungsmasse.

Als weitere übliche Hilfsstoffe finden erfindungsgemäß beispielsweise sogenannte Pigmentdispergierhilfsmittel, Filmbildehilfsmittel, Verdicker, Entschäumer, Netz- und Dispergierhilfsmittel, Neutralisationsmittel und/oder Konservierungsmittel enthalten. Der Gesamtgehalt an weiteren üblichen Hilfsstoffen beträgt in der Regel ≤ 10 Gew.-%, oder ≤ 5 Gew.-%, jeweils bezogen auf den Feststoffgehalt der wässrigen Beschichtungsmasse.

Filmbildehilfsmittel, auch Koaleszenzhilfsmittel genannt, werden eingesetzt, um auch polymere Bindemittel mit einer Glasübergangstemperatur von über 20 °C sicher bei Raumtemperatur verfilmen zu können. Diese Filmbildehilfsmittel verbessern die Filmbildung des polymeren Bindemittels bei der Ausbildung der Beschichtung und werden dann anschließend in Abhängigkeit von der Umgebungstemperatur, der Luftfeuchtigkeit und des Siedepunkts, sowie dem daraus resultierenden Dampfdruck aus der Beschichtung an die Umgebung abgegeben. Bei den Filmbildehilfsmittel, welche dem Fachmann bekannt sind, handelt es sich beispielsweise um Testbenzin, wassermischbare Glykolether, wie Butylglykol, Butyldiglykol, Dipropylenglykolmonomethyl- oder Dipropylenglykolbutylether sowie Glykolacetate, wie Butylglykolacetat, Butyldiglykolacetat, aber auch Ester von Carbonsäuren und Dicarbonsäuren, wie 2-Ethylhexylbenzoat, 2,2,4-Trimethylpentandiol-1,3-monoisobutyrat oder Tripropylenglykolmonoisobutyrat.

Um die Rheologie von wässrigen Beschichtungsmassen bei Herstellung, Handling, Lagerung und Applikation optimal einzustellen, werden häufig sogenannte Verdicker oder Rheologieadditive als Formulierungsbestandteil eingesetzt. Dem Fachmann sind eine Vielzahl unterschiedlicher Verdicker bekannt, beispielsweise organische Verdicker, wie

Xanthanverdicker, Guarverdicker (Polysaccharide), Carboxymethylcellulose, Hydroxyethylcellulose, Methylcellulose, Hydroxypropylmethylcellulose, Ethylhydroxyethylcellulose (Cellulosederivate), alkaliquellbare Dispersionen (Acrylatverdicker) oder hydrophob modifizierte, polyetherbasierte Polyurethane (Polyurethanverdicker) oder anorganische Verdikker, wie Bentonit, Hectorit, Smectit, Attapulgit (Bentone) sowie Titanate oder Zirkonate (Metallorganyle).

Um die Schaumbildung bei Herstellung, Handling, Lagerung und Applikation der wässrigen Beschichtungsmassen zu vermeiden, finden sogenannte Entschäumer Verwendung. Die Entschäumer sind dem Fachmann geläufig. Es handelt sich hierbei im wesentlichen um Mineralöl- und die Silikonölentschäumer. Entschäumer, vor allem die hochaktiven silikonhaltigen, sind generell sehr sorgfältig auszuwählen und zu dosieren, da sie zu Oberflächendefekten (Krater, Dellen etc.) der Beschichtung führen können. Wesentlich ist, dass durch Zusatz von feinstteiligen, hydrophoben Partikeln, beispielsweise hydrophobe Kieselsäure oder Wachspartikel, in die Entschäumerflüssigkeit, die Entschäumerwirkung noch gesteigert werden kann.

Netz- und Dispergierhilfsmittel werden verwendet, um die pulverförmigen Pigmente und Füllstoffe in der wässrigen Beschichtungsmasse optimal zu verteilen. Dabei unterstützen die Netz- und Dispergierhilfsmittel den Dispergiervorgang durch Erleichterung der Benetzung der pulverförmigen Pigmente und Füllstoffe im wässrigen Dispersionsmedium (Netzmittelwirkung), durch Aufbrechen von Pulveragglomeraten (Spaltwirkung) und durch sterische bzw. elektrostatische Stabilisierung der beim Scherprozess entstehenden Pigment- und Füllstoffprimärpartikel (Dispergiermittelwirkung). Als Netz- und Dispergierhilfsmittel werden insbesondere die dem Fachmann geläufigen Polyphosphate und Salze von Polycarbonsäuren, insbesondere Natriumsalze von Polyacrylsäuren bzw. Acrylsäure-Copolymeren eingesetzt.

Falls erforderlich, können dem Fachmann als Neutralisationsmittel geläufige Säuren oder Basen, beispielsweise Basen auf Basis hydroxygruppenhaltiger Alkylaminoverbindungen (siehe hierzu die nicht vorveröffentlichte deutsche Patentanmeldung des Anmelders mit dem Aktenzeichen DE 102004010155.8 (WO-A-2005083015 gemäß Artikel 54(3) EPÜ)) zur pH-Werteinstellung der wässrigen Beschichtungsmasse verwendet werden.

Um den Befall der wässrigen Beschichtungsmassen bei Herstellung, Handling, Lagerung und Applikation durch Mikroorganismen, wie beispielsweise Bakterien, (Schimmel)Pilzen oder Hefen zu vermeiden, werden häufig dem Fachmann geläufige Konservierungsmittel oder Biocide eingesetzt. Dabei finden insbesondere Wirkstoffkombinationen aus Methyl- und Chlorisothiazolinonen, Benzisothiazolinonen, Formaldehyd bzw. formaldehydabspaltende Agenzien Verwendung.

Neben vorgenannten Hilfsstoffen können den wässrigen Beschichtungsmassen bei-Herstellung, Handling, Lagerung und Applikation auch noch weitere, dem Fachmann geläufige Hilfsstoffe, wie beispielsweise Mattierungsmittel, Wachse oder Verlaufshilfsmittel etc. zugesetzt werden.

Darüber hinaus ist es prinzipiell möglich, die erfindungsgemäßen wässrigen Beschichtungsmassen mit Hydrophobierungsmitteln, beispielsweise auf Basis von Polysiloxanen oder Silikonharzen, zu mischen.

Die erfindungsgemäßen wässrigen Beschichtungsmassen eignen sich insbesondere zum Beschichten von Substraten. Als Substrate können beispielsweise Kunststoffe, wie Polyethylen, Polypropylen, Polyamid, Polystyrol oder Polyester, Metalle bzw. Metalllegierungen, wie Eisen, Stahl, Aluminium, Kupfer oder Bronze, Holz, Papier, Pappe oder mineralische Untergründe, wie beispielsweise Beton, Gips, Mörtel, Glas oder Keramik eingesetzt werden.

Dabei erfolgt die Herstellung eines beschichteten Substrats dergestalt, dass eine erfindungsgemäße wässrige Beschichtungsmasse auf die Oberfläche eines Substrats aufgebracht und unter Bedingungen getrocknet wird, bei welchen das Polymerisat verfilmt. Die Bedingungen (Druck und Temperatur) der Verfilmung sind insbesondere abhängig von der Polymerisatzusammensetzung (und der daraus resultierenden Mindestfilmbildungstemperatur bzw. Glasübergangstemperatur) bzw. dem Vorliegen von Filmbildehilfsmitteln. Diese Bedingungen sind dem Fachmann entweder geläufig oder können von ihm in wenigen Vorversuchen ermittelt werden. Häufig ist es günstig, wenn das Polymerisat eine Glasübergangstemperatur im Bereich ≤ 50 °C, insbesondere ≤ 30 °C oder ≤ 20 °C und ≥ -30 °C, bevorzugt ≥ -15 °C aufweist.

Durch die Bereitstellung der erfindungsgemäßen wässrigen Beschichtungsmassen ist es gelungen, Beschichtungsmassen auf Basis organischer Bindemittel und photokatalytisch aktiver Pigmente, insbesondere dem günstig verfügbaren photokatalytischen Anatas bereitzustellen, deren getrocknete Oberflächen hydrophile und/oder antimikrobielle, d.h. anschmutzungsresistente Eigenschaften aufweisen und dabei gleichzeitig eine verminderte Kreidungsneigung zeigen. Desweiteren zeigen die mit den erfindungsgemäßen Beschichtungsmassen beschichteten Oberflächen eine deutlich verringerte Vergilbungsneigung. Die erfindungsgemäßen Beschichtungsmassen lassen sich daher insbesondere zur Beschichtung von Substraten im Außenbereich einsetzen.

Die Erfindung wird anhand der nachfolgenden, nicht einschränkenden Beispiele näher erläutert.

Beispiele

I Herstellung einer wässrigen Kompositpartikel-Dispersion NK1

In einem 2l-Vierhalskolben, ausgerüstet mit einem Rückflusskühler, einem Thermometer, einem mechanischen

Rührer sowie einer Dosiervorrichtung, wurden bei 20 bis 25 °C (Raumtemperatur) und 1 bar (absolut) unter Stickstoffatmosphäre und Rühren (200 Umdrehungen pro Minute) 416,6 g Nyacol® 2040 und daran anschließend ein Gemisch aus 2,5 g Methacrylsäure und 12 g einer 10 gew.-%igen wässrigen Lösung von Natriumhydroxid innerhalb von 5 Minuten zugegeben. Danach fügte man der gerührten Reaktionsmischung während 15 Minuten ein Gemisch aus 10,4 g einer 20 gew.-%igen wässrigen Lösung des nichtionischen Tensids Lutensol® AT 18 (Marke der BASF AG, $C_{16}C_{18}$-Fettalkoholethoxilat mit 18 Ethylenoxid-Einheiten) und 108,5 g entionisiertem Wasser zu. Daran anschließend wurde dem Reaktionsgemisch während 60 Minuten 0,83 g N-Cetyl-N,N,N-trimethylammoniumbromid (CTAB), gelöst in 200 g entionisiertem Wasser, zudosiert. Danach heizte man das Reaktionsgemisch auf eine Reaktionstemperatur von 80 °C auf.

Parallel stellte man als Zulauf 1 eine Monomerenmischung, bestehend aus 117,5 g Methylmethacrylat (MMA), 130 g n-Butylacrylat (n-BA) und 0,5 g Methacryloxypropyltrimethoxysilan (MEMO) sowie als Zulauf 2 eine Initiatorlösung, bestehend aus 2,5 g Natriumperoxodisulfat, 7 g einer 10 gew.-%igen Lösung von Natriumhydroxid und 200 g entionisiertem Wasser, her.

Anschließend wurden der bei Reaktionstemperatur gerührten Reaktionsmischung während 5 Minuten über zwei separate Zulaufleitungen 21,1 g von Zulauf 1 und 57,1 g von Zulauf 2 zugegeben. Danach rührte man die Reaktionsmischung eine Stunde bei Reaktionstemperatur. Anschließend fügte man dem Reaktionsgemisch 0,92 g einer 45 gew.-%igen wässrigen Lösung von Dowfax® 2A1 zu. Innerhalb von 2 Stunden wurden nun zeitgleich beginnend die Reste von Zulauf 1 und Zulauf 2 dem Reaktionsgemisch kontinuierlich zudosiert. Danach rührte man die Reaktionsmischung eine weitere Stunde bei Reaktionstemperatur und kühlte sie anschließend auf Raumtemperatur ab.

Die so erhaltene wässrige Kompositpartikel-Dispersion wies einen Feststoffgehalt von 35,1 Gew.-%, bezogen auf das Gesamtgewicht der wässrigen Kompositpartikel-Dispersion, auf.

Der Feststoffgehalt wurde bestimmt, indem ca. 1 g der wässrigen Kompositpartikel-Dispersion in einem offenen Aluminiumtiegel mit einem Innendurchmesser von ca. 3 cm in einem Trockenschrank bei 150 °C bis zur Gewichtskonstanz getrocknet wurde. Zur Bestimmung des Feststoffgehalts wurden jeweils zwei separate Messungen durchgeführt und der entsprechende Mittelwert gebildet.

Der Gehalt an feinteiligem anorganischem Feststoff im Kompositpartikel errechnet sich zu 40 Gew.-%, bezogen auf das Kompositpartikel-Gesamtgewicht.

Das Polymerisat der Kompositpartikel wies eine Glasübergangstemperatur von < 5 °C auf (DIN 53 765).

Die mittels der Methode der Analytischen Ultrazentrifuge bestimmte mittlere Teilchendurchmesser ($d_{50}$) der Kompositpartikel betrug 65 nm.

II Herstellung der wässrigen Beschichtungsmassen

Wässrige Beschichtungsmassen wurden mit der vorbeschriebenen wässrigen Kompositpartikel-Dispersion sowie mit zwei handelsüblichen wässrigen Polymerdispersionen als polymere Bindemittel hergestellt. Als handelsübliche wässrige Polymerdispersionen wurden Acronal® S 790, einem Styrolacrylat mit einem Feststoffgehalt von 50 Gew.-% und einer Mindestfilmbildetemperatur von ca. 20 °C sowie Acronal® DS 6254, ein Reinacrylat mit einem Feststoffgehalt von 48 Gew.-% und einer Mindestfilmbildetemperatur von ca. 14 °C (beides Verkaufsprodukte der Fa. BASF AG) eingesetzt.

Bei den Formulierungen der wässrigen Beschichtungsmassen wurde darauf geachtet, dass gleiche Pigmentvolumenkonzentrationen vorlagen. Dabei ist zu beachten, dass die Siliziumdioxid-Partikel in der wässrigen Kompositpartikel-Dispersion als Füllstoff mit einer Dichte von 2,3 $g/cm^3$ angesehen wurden und dementsprechend als solche in der PVK-Berechnung einflossen.

Zur Überprüfung des photokatalytischen Effektes wurde in den entsprechenden wässrigen Beschichtungsmassen die nicht photoaktive (mit Aluminium-/Zirkoniumoxiden oberflächenbeschichtete) Rutil-Modifikation des Titandioxides (Kronos® 2190, Verkaufsprodukt der Fa. Kronos Titan GmbH) durch unterschiedliche Mengen an photoaktiver Anatas-Modifikation (Hombikat® UV 100, Verkaufsprodukt der fa. Sachtleben Chemie GmbH) ausgetauscht.

Die Feststoffgehalte der Beschichtungsmassen V1-V9, 10-12 wurden bestimmt, indem ca. 1 g der wässrigen Beschichtungsmassen in einem offenen Aluminiumtiegel mit einem Innendurchmesser von ca. 3 cm in einem Trockenschrank bei 150 °C bis zur Gewichtskonstanz getrocknet wurde. Zur Bestimmung des Feststoffgehalts wurden jeweils zwei separate Messungen durchgeführt und der entsprechende Mittelwert gebildet.

Vergleichsbeispiele 1 - 4

Es wurde bei Raumtemperatur unter Rühren mit einem Scheibenrührer bei 1000 Umdrehungen pro Minute eine Pigmentpaste hergestellt aus (Zugabe in der angegebenen Reihenfolge): 62,5 g entionisiertes Wasser, 3 g Dispergiermittel (Pigrnentverteiter A, Verkaufsprodukt der Fa. BASF AG), 4 g einer 25 gew.-%igen Lösung von Natriumpolyphosphat (Calgon® N, Verkaufsprodukt der Fa. Reckitt Benkisser GmbH) in entionisiertem Wasser, 2 g einer 20 gew.-%igen Lösung von Natriumhydroxid in entionisiertem Wasser, 3 g Konservierungsmittel (Parmetol® A 26, Verkaufsprodukt der Fa. Schütke&Mayer GmbH), 10 g eines weiteren Konservierungsmittels (Acticide® EPS, Verkaufsprodukt der Fa. Thor Chemie), 96 g einer 2 gew.-%igen Lösung eines Verdickers (Walocel® MW 20000, Verkaufsprodukt der Fa. Wolff Cellulosics GmbH & Co. KG) in entionisiertem Wasser, 12,5 g eines Filmbildehilfsmittels (Testbenzin 180 - 210 °C), 7 g eines weiteren Filmbildehilfsmittels (Lusolvan® FBH, Verkaufsprodukt der Fa. BASF AG), A g Titandioxid in der Rutil-Modifikation (Kronos® 2190, Fa. Kronos Titan GmbH), B g Titandioxid in der Anatas-Modifikation (Hombikat® UV 100, Fa. Sachtleben Chemie GmbH), 192 g Kalziumcarbonat (Omyacarb® 5 GU, Fa. Omya GmbH) und 48 g Talkum (Finntalc® M15, Fa. Omya GmbH). Nach beendeter Zugabe wurde die Pigmentpaste 20 Minuten bei 1000 Umdrehungen pro Minute weitergerührt. Danach wurden der Paste unter weiterem Rühren 3 g eines Entschäumers (Agitan® 280, Verkaufsprodukt der Fa. Münzing Chemie), 373 g Acronal® S 790 sowie 11 g entionisiertes Wasser zugesetzt. Die so erhaltene wässrige Beschichtungsmasse wurde für weitere 20 Minuten bei 500 Umdrehungen pro Minute gerührt. Vor den weiteren Prüfungen ließ man die Beschichtungsmasse 24 Stunden bei Raumtemperatur ruhen. Folgende wässrige Beschichtungsmassen wurden hergestellt:

| Beschichtungsmasse Nr. | V1 | V2 | V3 | V4 |
|---|---|---|---|---|
| Menge (A) Kronos® 2190 [g] | 173 | 164,4 | 155,7 | 138,4 |
| Mengen (B) Hombikat® UV 100 [g] | 0 | 8,6 | 17,3 | 34,6 |
| PVK [%] | 43 | 43 | 43 | 43 |
| Feststoffgehalt [Gew.-%] | 61,9 | 61,0 | 62,1 | 61,6 |

Vergleichsbeispiele 5 - 8

Es wurde bei Raumtemperatur unter Rühren mit einem Scheibenrührer bei 1000 Umdrehungen pro Minute eine Pigmentpaste hergestellt aus (Zugabe in der angegebenen Reihenfolge): 137 g entionisiertem Wasser, 2 g Pigmentverteiler A, 2 g einer 20 gew.-%igen Lösung von Natriumhydroxid in entionisiertem Wasser, 3 g einer 25 gew.-%igen Lösung von Calgon® N in entionisiertem Wasser, 4 g Parmetol® A 26, 50 g einer 2 gew.-%igen Lösung eines Verdickers (Natrosol® 250 HHR, Verkaufsprodukt der Fa. Hercules Inc.) in entionisiertem Wasser, 4 g eines weiteren Verdickungsmittels (Collacral® PU 85, Verkaufsprodukt der Fa. BASF AG), 1 g des Entschäumers Agitan® 280, 12 g Testbenzin 180 - 210 °C, 12 g eines Lösemittels (Butyldiglykol), 12 g eines weiteren Lösemittels (Propylenglykol), C g Kronos® 2190, D g Hombikat® UV 100, 175 g Omyacarb® 5 GU und 55 g Finntalc® M15. Nach beendeter Zugabe wurde die Pigmentpaste 20 Minuten bei 1000 Umdrehungen pro Minute weitergerührt. Danach wurden der Paste unter weiterem Rühren 2 g Agitan® 280, 364 g Acronal® DS 6254 sowie 6 g entionisiertes Wasser zugesetzt. Die so erhaltene wässrige Beschichtungsmasse wurde für weitere 20 Minuten bei 500 Umdrehungen pro Minute gerührt. Vor den weiteren Prüfungen ließ man die Beschichtungsmasse 24 Stunden bei Raumtemperatur ruhen. Folgende wässrige Beschichtungsmassen wurden hergestellt:

| Beschichtungsmasse Nr. | V5 | V6 | V7 | V8 |
|---|---|---|---|---|
| Menge (C) Kronos® 2190 [g] | 155 | 147,2 | 139,5 | 124 |
| Menge (D) Hombikat® UV 100 [g] | 0 | 7,8 | 15,5 | 31 |
| PVK [%] | 43 | 43 | 43 | 43 |
| Feststoffgehalt [Gew.-%] | 56,6 | 57,7 | 57,1 | 57,3 |

Vergleichsbeispiel 9 und die erfindungsgemäßen Beispiele 10 - 12

Es wurde bei Raumtemperatur unter Rühren mit einem Scheibenrührer bei 1000 Umdrehungen pro Minute eine Pigmentpaste hergestellt aus (Zugabe in der angegebenen Reihenfolge): 100 g entionisiertem Wasser, 2 g eines Konservierungsmittels (Acticide® MBS, Verkaufsprodukt der Fa. Thor Chemie GmbH), 2 g eines weiteren Konservierungsmittels (Acticide® DW, Verkaufsprodukt der Fa. Thor Chemie GmbH), 2,5 g eines Verdickungsmittels (Collacral® DS 6256, Verkaufsprodukt der Fa. BASF AG), 0,5 g einer 25 gew.-%igen Lösung von Ammoniak in Wasser, 8 g eines Dispergiermittels (AMP 90, Verkaufsproukt der Fa. Dow Chemicals), 10 g eines weiteren Dispergiermittels (Pigmentverteiler MD 20, Verkaufsprodukt der Fa. BASF AG), 10 g eines weiteren Dispergiermittels (Collacral® LR 8954, Verkaufsprodukt der Fa. BASF AG), 2 g eines Entschäumers (Tego LAE 511, Verkaufsprodukt der Fa. Tego GmbH), E g Kronos® 2190, F g Hombikat® UV 100, 40 g Omyacarb® 5 GU und 20 g Finntalc® M15. Nach beendeter Zugabe wurde

die Pigmentpaste 20 Minuten bei 1000 Umdrehungen pro Minute weitergerührt. Danach wurden der Paste unter weiterem Rühren 632 g der oben beschriebenen wässrigen Kompositpartikel-Dispersion NK1, 1 g eines Entschäumers (Byk® 022, Verkaufsprodukt der Fa. Byk-Chemie GmbH) sowie 20 g einer 5 gew.-%igen Lösung eines Verdickers (Colfacral® LR 8990, Verkaufsprodukt der Fa. BASF AG) in entionisiertem Wasser zugesetzt. Die so erhaltene Beschichtungsmasse wurde für weitere 20 Minuten bei 500 Umdrehungen pro Minute gerührt. Vor den weiteren Prüfungen ließ man die Beschichtungsmasse 24 Stunden bei Raumtemperatur ruhen. Folgende wässrige Beschichtungsmassen wurden hergestellt:

| Beschichtungsmasse Nr. | V9 | 10 | 11 | 12 |
|---|---|---|---|---|
| Menge (E) Kronos® 2190 [g] | 150 | 142,5 | 135 | 120 |
| Menge (F) Hombikat® UV 100 [g] | 0 | 7.5 | 15 | 30 |
| PVK [%] | 45,2 | 44,7 | 46,3 | 45,5 |
| Feststoffgehalt [Gew.-%] | 43 | 43 | 43 | 43 |

III Anwendungstechnische Prüfungen

Die unter II hergestellten Beschichtungsmassen V1 bis V9 sowie 10 bis 12 wurden in einer Stärke von 400 µm nass auf Glasplatten aufgezogen und für 1 Woche bei 23 °C und 50 % rel. Luftfeuchtigkeit getrocknet. Anschließend wurden die beschichteten Glasplatten einer Kurzbewitterung für 500 Stunden (Gerät Xenotest 1200, Fa. Heraeus, Hanau) unterzogen. Die Strahlungsleistung lag im Wellenlängenbereich von 290 bis 400 nm bei 100 ± 10 W/m$^2$. Dabei betrug die relative Luftfeuchtigkeit im Probenraum während der Trockenperiode 60 ± 5%. Die Probenraumtemperatur lag bei 37,5 ± 2,5 °C. Die Bewitterungszyklen betrugen 3 Minuten Beregnungsdauer und 17 Minuten Trocknungsdauer, wobei die Stahlungsquelle ständig in Betrieb war.

Vor und nach der Kurzbewitterung wurden die Kontaktwinkel der getrockneten Beschichtungsmassen bestimmt. Hierzu wurden auf einer optischen Bank mit Hilfe einer Spritze mit stumpfer Nadel drei separate Wassertropfen auf die Oberflächen der Beschichtungsmassen aufgebracht und mittels eines Goniometers (gemäß DIN EN 828) die entsprechenden Kontaktwinkel zwischen Wassertropfen und den Oberflächen der Beschichtungsmassen ermittelt. Dabei ist die Hydrophilie einer Oberfläche umso höher zu bewerten, je kleiner der gemessene Kontaktwinkel ausfällt. In den Beispielen wurde jeweils der Mittelwert der drei Einzelmessungen angegeben.

Weiterhin wurden vor und nach den Kurzbewitterungsversuchen die Delta E - CIE Lab-Werte (entsprechend DIN 53230) zur Beurteilung der Vergilbung der unterschiedlichen Beschichtungsmassen bestimmt (Gerät Chromameter CR 200, Fa. Minolta). Als Maß für die Vergilbung wurden die b-Werte herangezogen. Dabei ist zu beachten, dass ein höherer Δb-Wert, eine stärkere Vergilbung der Beschichtungsmasse reflektiert.

Neben der Vergilbung wurde auch die Kreidungsneigung der Beschichtungsmassen im Anschluss an die Kurzbewitterungsversuche nach Kempf (nach DIN 53159) bestimmt. Hierzu wurde angefeuchtetes schwarzes Photopapier mittels eines Stempels mit einem definierten Druck von 250 ± 25 N auf die Oberfläche der trockenen Beschichtungsmassen gepresst und anschließend wieder entfernt. Nach Trocknung der Photopapiere wurde die Kreidung optisch beurteilt und nach einer relativen Bewertungsskala mit einer Note bewertet. Dabei entsprechen die Werte 0 keiner und 5 extrem starker Kreidung. Alle anderen Werte liegen nach dem Schulnotensystem dazwischen.

Die erhaltenen Ergebnisse sind in der folgenden Tabelle zusammengefasst:

| Beschichtungsmasse Nr. | Vergilbung nach Bewitterung [Δb] | Kontaktwinkel vor Bewitterung [Grad] | Kontaktwinkel nach Bewitterung [Grad] | Kreidung nach Bewitterung [relative Note] |
|---|---|---|---|---|
| V1 | 1,08 | 77 | 25 | 3 |
| V2 | 1,32 | 81 | 17 | 4 |
| V3 | 1,59 | 82 | 13 | 4 |
| V4 | 1,91 | 87 | 14 | 5 |
| V5 | 0,79 | 94 | 69 | 0,5 |
| V6 | 1,03 | 95 | 24 | 3 |
| V7 | 1,24 | 92 | 17 | 3,5 |

(fortgesetzt)

| Beschichtungsmasse Nr. | Vergilbung nach Bewitterung [Δb] | Kontaktwinkel vor Bewitterung [Grad] | Kontaktwinkel nach Bewitterung [Grad] | Kreidung nach Bewitterung [relative Note] |
|---|---|---|---|---|
| V8 | 1,6 | 96 | 15 | 4 |
| V9 | 0,61 | 66 | 51 | 0,5 |
| 10 | 0,35 | 67 | < 10 | 1 |
| 11 | 0,22 | 69 | < 10 | 1,5 |
| 12 | 0,26 | 68 | < 10 | 2 |

Aus den in der Tabelle aufgelisteten Ergebnissen ist klar ersichtlich, dass die erfindungsgemäßen Beschichtungsmassen 10 bis 12 im Vergleich zu Vergleichsbeispielen V1 bis V9 eine deutlich geringere Vergilbungs- und Kreidungsneigung sowie eine wesentlich höhere Hydrophilie aufweisen.

## Patentansprüche

**1.** Wässrige Beschichtungsmasse, enthaltend

a) Partikel, mit einer mittleren Teilchengröße ≥ 10 nm und ≤ 500 nm, welche aus Polymerisat und feinteiligem anorganischem Feststoff aufgebaut sind (Kompositpartikel) sowie
b) als wenigstens ein pulverförmiges Pigment, Titandioxid in der Anatas-Modifikation.

**2.** Wässrige Beschichtungsmasse nach Anspruch 1, enthaltend wenigstens ein weiteres pulverförmiges Pigment.

**3.** Wässrige Beschichtungsmasse nach einem der Ansprüche 1 oder 2, enthaltend wenigstens einen pulverförmigen Füllstoff.

**4.** Wässrige Beschichtungsmasse nach einem der Ansprüche 1 bis 3, **dadurch gekennzeichnet, dass** das Polymerisat einen Tg-Wert ≤ 150 °C aufweist.

**5.** Wässrige Beschichtungsmasse nach einem der Ansprüche 1 bis 4, **dadurch gekennzeichnet, dass** die Kompositpartikel einen Gehalt an feinteiligem anorganischem Feststoff von ≥ 20 Gew.-% aufweisen.

**6.** Wässrige Beschichtungsmasse nach einem der Ansprüche 1 bis 5, **dadurch gekennzeichnet, dass** die Pigmentvolumenkonzentration (PVK) ≥ 10 % beträgt.

**7.** Wässrige Beschichtungsmasse nach einem der Ansprüche 1 bis 6, **dadurch gekennzeichnet, dass** die Kompositpartikel in Form einer wässrigen Kompositpartikel-Dispersion eingesetzt werden.

**8.** Wässrige Beschichtungsmasse nach Anspruch 7, **dadurch gekennzeichnet, dass** die wässrige Kompositpartikel-Dispersion nach einem Verfahren hergestellt wurde, bei dem wenigstens ein ethylenisch ungesättigtes Monomer in wässrigem Medium dispers verteilt und mittels wenigstens eines radikalischen Polymerisationsinitiators im Beisein wenigstens eines dispers verteilten, feinteiligen anorganischen Feststoffs und wenigstens eines Dispergiermittels nach der Methode der radikalisch wässrigen Emulsionspolymerisation polymerisiert wird, wobei

a) eine stabile wässrige Dispersion des wenigstens einen anorganischen Feststoffs eingesetzt wird, welche dadurch charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen gewichtsmittleren Durchmesser ≤ 100 nm aufweisen,
b) die dispergierten Feststoffteilchen des wenigstens einen anorganischen Feststoffs in einer wässrigen Standardkaliumchlorid-Lösung bei einem pH-Wert, der dem pH-Wert des wässrigen Dispergiermediums vor Beginn der Zugabe der Dispergiermittel entspricht, eine von Null verschiedene elektrophoretische Mobilität zeigen,

c) die wässrige Feststoffteilchendispersion vor Beginn der Zugabe des wenigstens einen ethylenisch ungesättigten Monomeren mit wenigstens einem anionischen, kationischen und nichtionischen Dispergiermittel versetzt wird,
d) danach von der Gesamtmenge des wenigstens einen Monomeren 0,01 bis 30 Gew.-% der wässrigen Feststoffteilchendispersion zugesetzt und bis zu einem Umsatz von wenigstens 90 % polymerisiert werden und
e) daran anschließend die Restmenge des wenigstens einen Monomeren unter Polymerisationsbedingungen nach Maßgabe des Verbrauchs kontinuierlich zugegeben wird.

**9.** Wässrige Beschichtungsmasse nach einem der Ansprüche 1 bis 8, **dadurch gekennzeichnet, dass** es sich bei dem feinteiligen anorganischen Feststoff um eine siliziumhaltige Verbindung handelt.

**10.** Wässrige Beschichtungsmasse nach einem der Ansprüche 1 bis 9, **dadurch gekennzeichnet, dass** es sich bei dem feinteiligen anorganischen Feststoff um pyrogene und/oder kolloidale Kieselsäure, Siliziumdioxid-Sole und/oder Schichtsilikate handelt.

**11.** Wässrige Beschichtungsmasse nach einem der Ansprüche 1 bis 10, **dadurch gekennzeichnet, dass** das Polymerisat zu 0,01 bis 5 Gew.-% wenigstens eines siloxangruppenhaltigen ethylenisch ungesättigten Monomeren in einpolymerisierter Form enthält.

**12.** Wässrige Beschichtungsmasse nach einem der Ansprüche 1 bis 11, **dadurch gekennzeichnet, dass** sie zu

| | |
|---|---|
| 5 bis 85 Gew.-% | Kompositpartikel, |
| 0,05 bis 20 Gew.-% | pulverförmiges Titandioxid in der Anatas-Modifikation, |
| 5 bis 60 Gew.-% | weitere pulverförmige Pigmente, |
| 0 bis 80 Gew.-% | pulverförmige Füllstoffe sowie |
| 0 bis 10 Gew.-% | weitere übliche Hilfsstoffe, |

jeweils bezogen auf den Feststoffgehalt der wässrigen Beschichtungsmasse, enthält.

**13.** Verwendung einer wässrigen Beschichtungsmasse gemäß einem der Ansprüche 1 bis 12 zum Beschichten eines Substrats.

**14.** Verfahren zur Herstellung eines beschichteten Substrats, **dadurch gekennzeichnet, dass** eine wässrige Beschichtungsmasse gemäß einem der Ansprüche 1 bis 12 auf ein Substrat aufgebracht und unter Bedingungen getrocknet wird, bei welchen das Polymerisat verfilmt.

**15.** Verfahren nach Anspruch 14, **dadurch gekennzeichnet, dass** als Substrat Kunststoff, Metall, Holz, Papier oder ein mineralischer Untergrund eingesetzt wird.

**16.** Beschichtetes Substrat, erhältlich nach dem Verfahren gemäß Anspruch 14 oder 15.

## Claims

**1.** An aqueous coating material comprising

a) particles having an average size ≥ 10 nm and ≤ 500 nm composed of addition polymer and finely divided inorganic solid (composite particles) and
b) as at least one pulverulent pigment, titanium dioxide in the anatase modification.

**2.** The aqueous coating material according to claim 1, comprising at least one further pulverulent pigment.

**3.** The aqueous coating material according to either of claims 1 and 2, comprising at least one pulverulent filler.

**4.** The aqueous coating material according to any one of claims 1 to 3, wherein the polymer has a Tg value ≤ 150°C.

**5.** The aqueous coating material according to any one of claims 1 to 4, wherein the composite particles have a finely divided inorganic solid content of ≥ 20% by weight.

**6.** The aqueous coating material according to any one of claims 1 to 5, wherein the pigment volume concentration (PVC) is ≥ 10%.

**7.** The aqueous coating material according to any one of claims 1 to 6, wherein the composite particles are used in the form of an aqueous composite-particle dispersion.

**8.** The aqueous coating material according to claim 7, wherein the aqueous composite particle dispersion has been prepared by a process in which at least one ethylenically unsaturated monomer is dispersely distributed in an aqueous medium and is polymerized by means of at least one free-radical polymerization initiator in the presence of at least one dispersely distributed, finely divided inorganic solid and at least one dispersant by the method of free-radical aqueous emulsion polymerization, where

a) a stable aqueous dispersion of the at least one inorganic solid is used, said dispersion having the characteristic features that at an initial solids concentration of ≥ 1% by weight, based on the aqueous dispersion of the at least one inorganic solid, it still comprises in dispersed form one hour after its preparation more than 90% by weight of the originally dispersed solid, and its dispersed solid particles have a weight-average diameter ≤ 100 nm,
b) the dispersed particles of the at least one inorganic solid exhibit a nonzero electrophoretic mobility in an aqueous standard potassium chloride solution at a pH which corresponds to the pH of the aqueous dispersion medium before the addition of the dispersants is commenced,
c) at least one anionic, cationic and nonionic dispersant is added to the aqueous dispersion of solid particles before the addition of the at least one ethylenically unsaturated monomer is commenced,
d) thereafter, of the total amount of the at least one monomer, 0.01% to 30% by weight are added to the aqueous dispersion of solid particles and polymerization is carried out to a conversion of at least 90%
and
e) subsequently the remainder of the at least one monomer is added continuously under polymerization conditions in accordance with the rate of its consumption.

**9.** The aqueous coating material according to any one of claims 1 to 8, wherein the finely divided inorganic solid is a silicon compound.

**10.** The aqueous coating material according to any one of claims 1 to 9, wherein the finely divided inorganic solid comprises pyrogenic and/or colloidal silica, silicon dioxide sols and/or phyllosilicates.

**11.** The aqueous coating material according to any one of claims 1 to 10, wherein the polymer comprises in copolymerized form 0.01% to 5% by weight of at least one ethylenically unsaturated monomer containing siloxane groups.

**12.** The aqueous coating material according to any one of claims 1 to 11, comprising

| | |
|---|---|
| 5% to 85% by weight | of composite particles, |
| 0.05% to 20% by weight | of pulverulent titanium dioxide in the anatase modification, |
| 5% to 60% by weight | of further pulverulent pigments, |
| 0% to 80% by weight | of pulverulent fillers, and |
| 0% to 10% by weight | of further customary auxiliaries, |

based in each case on the solids content of the aqueous coating material.

**13.** The use of an aqueous coating material according to any one of claims 1 to 12 to coat a substrate.

**14.** A method of producing a coated substrate, which comprises applying to a substrate an aqueous coating material according to any one of claims 1 to 12 and drying it under conditions in which the polymer forms a film.

**15.** The method according to claim 14, wherein the substrate used is plastic, metal, wood, paper or a mineral substrate.

**16.** A coated substrate obtainable by the method according to claim 14 or 15.

## Revendications

**1.** Matériau de revêtement aqueux, contenant

a) des particules, d'une taille de particule moyenne ≥ 10 nm et ≤ 500 nm, qui sont constituées d'un polymère et d'un solide organique finement divisé (particules composites), et
b) en tant qu'un ou plusieurs pigments pulvérulents, du dioxyde de titane de structure anatase.

**2.** Matériau de revêtement aqueux selon la revendication 1, contenant au moins un pigment pulvérulent supplémentaire.

**3.** Matériau de revêtement aqueux selon l'une quelconque des revendications 1 ou 2, contenant au moins une charge pulvérulente.

**4.** Matériau de revêtement aqueux selon l'une quelconque des revendications 1 à 3, **caractérisé en ce que** le polymère présente une Tg ≤ 150 °C.

**5.** Matériau de revêtement aqueux selon l'une quelconque des revendications 1 à 4, **caractérisé en ce que** les particules composites présentent une teneur en solide inorganique finement divisé ≥ 20 % en poids.

**6.** Matériau de revêtement aqueux selon l'une quelconque des revendications 1 à 5, **caractérisé en ce que** la concentration volumique en pigments (PVK) est ≥ 10 %.

**7.** Matériau de revêtement aqueux selon l'une quelconque des revendications 1 à 6, **caractérisé en ce que** les particules composites sont utilisées sous la forme d'une dispersion aqueuse de particules composites.

**8.** Matériau de revêtement aqueux selon la revendication 7, **caractérisé en ce que** la dispersion aqueuse de particules composites a été fabriquée par un procédé selon lequel au moins un monomère éthyléniquement insaturé est réparti de manière dispersée dans un milieu aqueux et polymérisé au moyen d'au moins un initiateur de polymérisation radicalaire en présence d'au moins un solide inorganique finement divisé, réparti de manière dispersée, et d'au moins un agent de dispersion, selon le procédé de polymérisation radicalaire en émulsion aqueuse,

a) une dispersion aqueuse stable du ou des solides inorganiques étant utilisée, qui est **caractérisée en ce qu'**avec une concentration de départ en solides ≥ 1 % en poids, par rapport à la dispersion aqueuse du ou des solides inorganiques, elle contient encore, une heure après sa fabrication, plus de 90 % en poids du solide dispersé initial sous forme dispersée, et **en ce que** ses particules solides dispersées présentent un diamètre moyen en poids ≤ 100 nm,
b) les particules solides dispersées du ou des solides inorganiques, dans une solution aqueuse de chlorure de potassium standard à un pH qui correspond au pH du milieu de dispersion aqueux avant le début de l'ajout de l'agent de dispersion, présentant une mobilité électrophorétique différente de zéro,
c) la dispersion aqueuse de particules solides étant mélangée avec au moins un agent de dispersion anionique, cationique et non ionique avant le début de l'ajout du ou des monomères éthyléniquement insaturés,
d) de la totalité du ou des monomères, 0,01 à 30 % en poids de la dispersion aqueuse de particules solides étant ensuite ajoutés et polymérisés jusqu'à une conversion d'au moins 90 %
et
e) la quantité résiduelle du ou des monomères étant ensuite ajoutée en continu dans les conditions de la polymérisation après mesure de la consommation.

**9.** Matériau de revêtement aqueux selon l'une quelconque des revendications 1 à 8, **caractérisé en ce que** le solide inorganique finement divisé est un composé contenant du silicium.

**10.** Matériau de revêtement aqueux selon l'une quelconque des revendications 1 à 9, **caractérisé en ce que** le solide inorganique finement divisé est une silice pyrogénée et/ou colloïdale, des sols de dioxyde de silicium et/ou des silicates stratifiés.

**11.** Matériau de revêtement aqueux selon l'une quelconque des revendications 1 à 10, **caractérisé en ce que** le polymère contient 0,01 à 5 % en poids d'au moins un monomère éthyléniquement insaturé contenant des groupes siloxane sous forme polymérisée.

**12.** Matériau de revêtement aqueux selon l'une quelconque des revendications 1 à 11, **caractérisé en ce qu'**il contient

| | |
|---|---|
| 5 à 85 % en poids | de particules composites |
| 0,05 à 20 % en poids | de dioxyde de titane pulvérulent de structure anatase, |
| 5 à 60 % en poids | de pigments pulvérulents supplémentaires, |
| 0 à 80 % en poids | de charges pulvérulentes et |
| 0 à 10 % en poids | d'adjuvants usuels supplémentaires, |

à chaque fois par rapport à la teneur en solides du matériau de revêtement aqueux.

**13.** Utilisation d'un matériau de revêtement aqueux selon l'une quelconque des revendications 1 à 12 pour le revêtement d'un substrat.

**14.** Procédé de fabrication d'un substrat revêtu, **caractérisé en ce qu'**un matériau de revêtement aqueux selon l'une quelconque des revendications 1 à 12 est appliqué sur un substrat et séché dans des conditions dans lesquelles le polymère forme un film.

**15.** Procédé selon la revendication 14, **caractérisé en ce que** du plastique, du métal, du bois, du papier ou un substrat minéral est utilisé en tant que substrat.

**16.** Substrat revêtu, pouvant être obtenu par un procédé selon la revendication 14 ou 15.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 625541 A
- WO 9312183 A
- EP 634462 A
- EP 1371679 A
- FR 2842531 A
- JP 10309419 A
- US 3544500 A
- US 4421660 A
- US 4608401 A
- US 4981882 A
- EP 104498 A
- EP 505230 A
- EP 572128 A
- GB 2227739 A
- WO 0118081 A
- WO 0129106 A
- WO 03000760 A
- US 4269749 A
- DE 102004010155
- WO 2005083015 A


### In der Beschreibung aufgeführte Nicht-Patentliteratur


- **R. Benedix et al.** *Lacer,* 2000, (5), 157, 167
- **R. Benedix et al.** *Lacer,* 2000, 161
- Dispersionen für Bautenfarben. **R. Baumstark ; M. Schwartz ; Curt R.** Acrylatsysteme in Theorie und Praxis. Vincentz Verlag, 2001, 64
- Analytical Ultracentrifugation in Biochemistry and Polymer Science. **S.E. Harding et al.** Royal Society of Chemistry. Great Britain, 1992
- **W. Mächtle.** Analysis of Polymer Dispersions with an Eight-Cell-AUC-Multiplexer. *High Resolution Particle Size Distribution and Density Gradient Techniques,* 147, 175
- **Long et al.** *Tianjin Daxue Xuebao,* 1991, vol. 4, 10-15
- **Bourgeat-Lami et al.** *Die Angewandte Makromolekulare Chemie,* 1996, vol. 242, 105-122
- **Paulke et al.** Synthesis Studies of Paramagnetic Polystyrene Latex Particles in Scientific and Clinical Applications of Magnetic Carriers. Plenum Press, 1997, 69-76
- **Armes et al.** *Advanced Materials,* 1999, vol. 11 (5), 408-410
- **R.J. Hunter.** Introduction to modern Colloid Science. Oxford University Press, 1993, 241-248
- Electrical Phenomena at Interfaces. **K. Oka ; K. Furusawa.** Surfactant Science Series. Marcel Dekker, 1998, vol. 76, 151-232
- **B.R. Ware ; W.H. Flygare.** *Chem. Phys. Lett.,* 1971, vol. 12, 81-85
- **E. Matijevic.** *Chem. Mater.,* 1993, vol. 5, 412-426
- Ullmann's Encyclopedia of Industrial Chemistry. Verlag Chemie, 1992, vol. A 23, 583-660
- **D.F. Evans ; H. Wennerström.** The Colloidal Domain. Verlag Chemie, 1994, 363-405
- **R.J. Hunter.** Foundations of Colloid Science. Clarendon Press, 1991, vol. I, 10-17
- Methoden der organischen Chemie. **Houben-Weyl.** Makromolekulare Stoffe. Georg-Thieme-Verlag, 1961, vol. XIV/1, 411-420
- Methoden der organischen Chemie. **Houben-Weyl.** Makromolekulare Stoffe. Georg-Thieme-Verlag, 1961, vol. XIV/1, 192-208
- **H. Stache.** Tensid-Taschenbuch. Carl-Hanser-Verlag, 1981
- **McCutcheon's ; Glen Rock.** Emulsifiers & Detergents. MC Publishing Company, 1989
- **J. Brandrup ; E.H. Immergut.** Polymerhandbook. John Weley & Sons, 1989, 133-141
- **T.G. Fox.** *Bull. Am. Phys. Soc.,* 1956, vol. 1, 123
- **Ullmann's.** Encyclopädie der technischen Chemie. Verlag Chemie, 1980, vol. 19, 18
- **Ullmann's.** Encyclopedia of Industrial Chemistry. Verlag Chemie, 1992, vol. A21, 189
- **J. Brandrup ; E.H. Immergut.** Polymer Handbook. J. Wiley, 1966
- POLYMER HANDBOOK. J.Wiley, 1975
- POLYMER HANDBOOK. J. Wiley, 1989